# EUROPEAN PATENT APPLICATION

(11) **EP 3 994 995 A1**
(43) Date of publication of application: **11.05.2022**
(21) Application number: 20206340.0
(22) Date of filing: 08.11.2020
(51) Int. Cl.: A01N 25/06, A01N 25/30, A01N 25/32, A01N 41/10, A01N 43/56, A01N 43/653, A01N 43/66, A01N 43/713, A01N 43/80, A01N 47/06, A01P 3/00, A01P 7/00, A01P 13/00

(54) **LOW DRIFT, RAINFASTNESS, HIGH SPREADING, HIGH UPTAKE AND ULV TANK MIX ADJUVANT FORMULATION**

(71) Applicant: Bayer Aktiengesellschaft, 51373 Leverkusen (DE); Bayer CropScience K.K., Tokyo 100-8262 (JP)
(72) Inventor: The designation of the inventor has not yet been filed
(74) Representative: BIP Patents

(57) **Abstract**

The present invention relates to agricultural adjuvant compositions for tank-mixture with crop protection products: their use for foliar application; their use at low spray volumes; their use by unmanned aerial systems (UAS), unmanned guided vehicles (UGV), and tractor mounted boom sprayers fitted with conventional nozzles but also pulse width modulation spray nozzles or rotating disc droplet applicators; and their application for controlling agricultural pests, weeds or diseases, in particular on waxy leaves.

## Description

The present invention relates to agricultural adjuvant compositions for tank-mixture with crop protection products: their use for foliar application; their use at low spray volumes; their use by unmanned aerial systems (UAS), unmanned guided vehicles (UGV), and tractor mounted boom sprayers fitted with conventional nozzles but also pulse width modulation spray nozzles or rotating disc droplet applicators; and their application for controlling agricultural pests, weeds or diseases, in particular on waxy leaves.

The efficient foliar application of agricultural products for controlling disease infections, insect infestations and weeds is an important contributor for the supply of sufficient food for the increasing population in our world. This is commonly achieved by spray application of a dilution of the agricultural product in water. However, the spray application process is not always very efficient, with possible off-target losses occurring from drift of fine spray droplets, poor retention from spray droplets bouncing off and rolling off leaf surfaces, poor wetting and coverage on the target plants, poor uptake of active ingredients into the target plants, and wash-off of the active ingredient by rainfall. There is therefore a need to improve the efficiency of spray application of agricultural products onto target plants.

The solution is found by a combination of materials that can be formulated as an adjuvant formulation (also referred to as adjuvant mixture or adjuvant combination or adjuvant composition) that can be added to the spray dilution of the agricultural products to reduce off-target drift, increase the retention on leaves, increase the wetting, coverage and uptake, and reduce the wash-off by rainfall. Furthermore, it is especially important that the adjuvant mixture is effective at low spray volumes (typically less than or equal to 25 to 50 1/ha depending on the crop canopy density, and extending up to 50 to 80 1/ha for orchards) where application technologies such as unmanned aerial vehicles (UAV), unmanned ground vehicles (UGV) and low spray volume boom spray vehicles can provide lower CO2 emissions. Furthermore, it is important that the adjuvant mixture does not produce high levels of foam, especially at low spray volumes.

Another aspect of the instant invention is the reduction of foam or foaming, which in particular in highly concentrated formulations comprising a relatively high amount of surfactants is an issue.

The present invention relates to adjuvant compositions for tank-mixture with crop protection products: their use for foliar application; their use at low spray volumes; their use by unmanned aerial systems (UAS), unmanned guided vehicles (UGV), and tractor mounted boom sprayers fitted with conventional nozzles but also pulse width modulation spray nozzles or rotating disc droplet applicators; and their application for controlling agricultural pests, weeds or diseases, in particular on waxy leaves.

Modern agriculture faces many challenges in producing sufficient food in a safe and sustainable way. There is therefore a need to utilise crop protection products to enhance the safety, quality and yield while minimising the impact to the environment and agricultural land. Many crop protection products, whether chemical or biological, are normally applied at relatively high spray volumes, for example in selected cases >50 L/ha, and often >150-400 L/ha. A consequence of this is that much energy must be expended to carry the high volume of spray liquid and then apply it to the crop by spray application. This can be performed by large tractors which on account of their weight and also the weight of the spray liquid produce CO₂ from the mechanical work involved and also cause detrimental compaction of the soil, affecting root growth, health and yield of the plants, as well as the energy subsequently expended in remediating these effects.

Moreover, when applying such spray formulations, a more or less pronounced drifting of the spray solution containing the active substance(s) may be observed, depending on the wind conditions, nozzle type, and other application parameters such as, for example, nozzle pressure, boom height, and tractor speed.

Pesticide spray drift is a major source of concern in relation to the environmental impact of agriculture on natural ecosystems and urban areas. Furthermore, this drift is undesirable because it causes a certain part of the applied agrochemical to be lost as far as the intended application rate of the treated area is concerned.

More importantly, the drifting material might cause damage to neighbouring crops and especially, have effects on the local environment (e.g., surface water, non-target flora and fauna) as well as bystanders and occupants in residential areas.

There is a need for a solution that significantly reduces the drift of the active ingredients / formulations, both when sprayed, while at the same time preferably reducing high volumes of spray liquid and reducing the weight of the equipment required to apply the product.

Various methods are used to prevent the drifting of the spray outside the field borders. The use of natural or artificial windbreaks is well known. However, it has been described that even when such screens are used, drift can cause deposition of the active substances behind such borders (e.g., "Deposition of spray drift behind border structures", M. De Schampheleire et al. Crop Protection 28 (2009) 1061-1075). Another frequently used drift mitigation measure is buffer zones, either off-crop or in-crop. A disadvantage of off-crop buffer zones is that part of the field cannot be sown with a crop, an economic cost to the farmer. A disadvantage of in-crop buffer zones is that part of the crop is not protected adequately, resulting in a lower yield and perhaps resistance development. Clearly, this is something farmers want to prevent.

Next to physically limiting spray drift, it is also possible to alter the structure of the spray cloud so that less drops are prone to drift - i.e., typically those drops prone to drift have a diameter under 100 µm. This can be done by choosing different types of nozzles, changing the pressure at which the spray cloud is produced, or by changing the properties of the spray liquid itself. Especially changing nozzles and / or nozzle pressure is something farmers do not prefer to do because it is time consuming and makes the production of their crop more expensive. Also, the equipment necessary on sprayer to deal with variable application rates is not common. For these reasons, a more acceptable way to optimise a spray cloud, so that it leads to less or more limited drift, is by adjusting the properties of the spray liquid.

Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of < 156 microns (µm) as the fraction of the spray droplet distribution that contributes to drift. Other researchers consider droplets with diameter < 150 µm to be most drift-prone (J. H. Combellack, N. M. Westen and R. G. Richardson, Crop Prot., 1996, 15, 147-152, O. Permin, L. N. Jørgensen and K. Persson, Crop Prot., 1992, 11, 541 - 546). Another group H. Zhu, R. W. Dexter, R. D. Fox, D. L. Reichard, R. D. Brazee and H. E. Ozkan, J. Agric. Engineering Res., 1997, 67, 35-45.) cites a value of < 200 µm as the driftable fraction. Based on theoretical studies and computer simulations, spray droplets with diameter < 100 µm have been identified as the most drift-prone (H. Holterman, Kinetics and evaporation of water drops in air, 2003, IMAG Report 2003-12; P. A. Hobson, P. C. H. Miller, P. J. Walklate, C. R. Tuck and N. M. Western, J. Agr. Eng. Res., 1993, 54, 293-305; P. C. H. Miller, The measurement of spray drift, Pesticide Outlook, 2003, 14, 205-209). A good estimation of droplet size likely to contribute to drift, therefore, is the fraction below about 100 µm (driftable fraction). The smaller the droplets the longer is the residence time in the air and the higher is the tendency to evaporate and / or to drift rather than deposit within the field borders. A way to minimize the drift effect is by adding suitable drift control agents to pesticide formulations that increase the size of the droplets in the spray cloud - i.e., shift the droplet spectra towards larger droplets. When searching for solutions to overcome the drift problem, it has to be taken into account that the biological performance of the resulting application is not reduced. The use of formulation (both in-can and tank-mix) that increase the spray droplet size may reduce the efficacy to some extent, mainly because of reduced cover (e.g., "Biological efficacy of herbicides and fungicides applied with low-drift and twin-fluid nozzles" P.K.Jensen et al. Crop Protection 20 (2001)57-64). Retention of larger droplets on leaf surfaces can be reduced as they run-off or bounce or shatter and redistribute. Fewer larger droplets adhering to the leaf surface can reduce overall biological efficacy. Furthermore, for crops where the spray cloud has to penetrate into the canopy of the crop, very large droplets can pass directly through canopies, or bounce off leaves, or shatter and redistribute to soil. All these effects of applying active compound in large droplets may add to reduced efficacy.

It also has to be taken into account that many compounds added to a formulation to improve efficacy, storage and other important properties often have a negative effect on drift properties of the spray broth, i.e. tend to reduce droplet size or enhance evaporation afterwards.

There is a need for a solution that significantly reduces the high volumes of spray liquid and reduces the weight of the equipment required to apply the product.

In agriculture, low spray volume application technologies including unmanned aerial systems (UAS), unmanned guided vehicles (UGV), and tractor mounted boom sprayers fitted with pulse width modulation spray nozzles or rotating disc droplet applicators are offering farmers solutions to apply products with low spray volumes, typically down to 10 to 20 1/ha or less. These solutions have advantages including for example that they require significantly less water which is important in regions where the supply of water is limited, require less energy to transport and apply the spray liquid, are faster both from quicker filling of the spray tank and faster application, reduce the CO₂ generation from both the reduced volume of spray liquid to transport and from the use of smaller and lighter vehicles, reduced soil compaction damage, and enabling the use of cheaper application systems.

However, Wang et al [Field evaluation of an unmanned aerial vehicle (UAV) sprayer: effect of spray volume on deposition and the control of pests and disease in wheat. Pest Management Science 2019 doi/epdf/10.1002/ps.5321] demonstrated that as the spray volume is decreased from 450 and 225 1/ha to 28.1, 16.8 and 9.0 1/ha, the coverage (% area), number of spray deposits per area, and diameter of the spray deposits as measured on water sensitive paper all decreased (see Table 3 in Wang *et al,* 2019). In parallel, the biological control efficacy for both wheat aphid control and powdery mildew control decreased at low spray volumes with the greatest decrease observed at 9.0 1/ha, followed by 16.8 1/ha (see Figures 6, 7 and 8 in Wang *et al,* 2019).

There is therefore a need to design formulation systems that overcome the reduction in the coverage and diameter of the spray deposits at low spray volumes even through the number of spray deposits per area is decreasing: as the spray volume decreases, the number of spray droplets per unit area decreases proportionately for the same spray droplet spectra size. This is especially necessary below 25 1/ha, more especially below 17 1/ha, and even more especially at 10 1/ha and below.

Moreover, due to an increase in concentration of adjuvants in the spray solution to enhance the spreading and the uptake into the plant, there is a higher chance for wash-off of the spray solution due to the higher local concentration of adjuvants and among them spreading agents.

Therefore, there is a need to provide formulations which, when sprayed at ultra-low spray volumes (e.g 2 to 20 1/ha) and as well at conventional volumes (e.g. 200 l/ha) according to the present invention, show a good coverage of the crops to provide good biological efficacy while at the same time provide better uptake and longer lasting biological efficacy with less wash-off (the latter combination also referred to as rainfastness).

The solution is provided by formulations containing specific spreading agents in combination with specific drift reduction agents at specific concentrations. Such formulations give increased coverage and increased diameter of spray deposits at low spray volumes. Furthermore, the increased coverage and increased diameter of spray deposits is comparable to the coverage obtained at normal higher spray volumes. Furthermore, the formulations exemplifying the invention are particularly effective on hard to wet leaf surfaces where more conventional spray volumes have poor retention and coverage.

A particular advantage of the invention stemming from the low total amount of organosilicone-based surfactant as well as other synthetic chemicals compared to the level required at normal higher spray volumes is lower cost of formulations and their ease of production as well as less inventory and transfer costs. Further advantages include improved formulation stability and simplified manufacture, less cost of goods as well as less impact on the environment.

Formulations, also for tank mixes, known in the prior art containing spreading agents are principally designed for much higher spray volumes and generally contain lower concentrations of spreading agents in the spray broth. Nevertheless, due to the high spray volumes used in the prior art, the total amount of spreading agents used and therefore in the environment is higher than according to the present invention.

The concentration of the spreading agents is an important element of the invention, since suitable spreading occurs when a certain minimum concentration of spreading agents is achieved, normally 0.05% w/w or w/v for organosilicone based materials and higher depending on the surfactant chemistry for example (%w/w and %w/v are equivalent since the density of the spreading agents is approximately 1.0 g/cm³.

Therefore, in a spray volume of 500 1/ha as it is used in the prior art, about 250 g/ha of spreading agents would be required to achieve suitable spreading. Hence, faced with the task to reduce the spray volume, the skilled person would apply the same concentration of spreading agents in the formulation. For example, for a spray volume of 101/ha about 5 g/ha (about 0.05% in the spray broth) surfactant would be required. However, at such a low volume with such low concentration of spreading agents sufficient spreading cannot be achieved (see examples).

Moreover, as pointed out above, according to the present invention, uptake enhancers have to be present to enable uptake of the active ingredients into the plants to enhance biological efficacy, while at the same time a rainfastness additive has to be present to prevent wash-off in an intolerable amount.

In this invention, we have surprisingly found that increasing the concentration of spreading agents as the spray volume decreases can compensate for the loss in coverage (due to insufficient spreading) from the reduction in spray volume. It was surprisingly found that for every reduction of the spray volume by 50%, the concentration of surfactant should roughly be doubled.

Thus, although the absolute concentration of the spreading agents is increased compared to formulations known in the art, the relative total amount per ha can be decreased, which is advantageous, both economically and ecologically, while coverage by and efficacy of the formulation according to the invention is improved, maintained or at least kept at an acceptable level when other benefits of the low volume applications are considered, e.g. less costs of formulation due to less cost of goods, smaller vehicles with less working costs, less compacting of soil etc.

Further, we have surprisingly found that the formulations according to the present invention show an comparable or enhanced uptake of active ingredient when compared to formulations with higher spray volumes known in the art.

It also has been found, that despite the high concentration of spreading agents, wetters and uptake enhancers the amount of drift and rainfastness of the formulations according to the present invention is also comparable or better than those of the reference formulations based on the prior art.

Further, it was found that when methyl esters of vegetable oils are used as b), there is also a positive effect observed on foaming, i.e. a reduction of foam, of the formulation, in particular in connection with the organosilicone spreaders.

A further part of the invention that allows surprising low total amount of spreading agents to be used is the surface texture of the target crop leaves. Bico et al [Wetting of textured surfaces, Colloids and Surfaces A, 206 (2002) 41-46] have established that compared to smooth surfaces, textured surfaces can enhance the wetting for formulation spray dilutions with contact angles <90° and reduce the wetting for contact angles >90°.

This is also the case for leaf surfaces, in particular textured leaf surfaces, when sprayed in a method according to the invention resulting in low total amounts (per ha) of spreading agents due to the low spray volumes with formulations according to the invention having a high concentration of the spreading agents. Remarkably high coverage of the leaf surfaces by the spray liquid, even to a level greater than would be normally be expected, could be demonstrated.

Textured leaf surfaces include leaves containing micron-scale wax crystals on the surface such as wheat, barley, rice, rapeseed, soybean (young plants) and cabbage for example, and leaves with surface textures such as lotus plant leaves for example. The surface texture can be determined by scanning electron microscope (SEM) observations and the leaf wettability determined by measuring the contact angle made by a drop of water on the leaf surface.

In summary, the object of the present invention is to provide an adjuvant formulation which can be applied in ultra-low volumes, i.e. < 20 1/ha, while still providing good leaf coverage, uptake and biological efficacy against fungicidal pathogens, weeds and pests, and providing good rain-fastness, and at the same time reducing the amounts of additional additives applied per ha, as well as a method of using said formulation at ultra-low volumes (< 20 l/ha), and the use of said formulation for application in ultra-low volumes as defined above.

In one aspect, the present invention is directed to the use of the compositions according to the invention for foliar application.

If not otherwise indicated, % in this application means percent by weight (%w/w).

It is understood that in case of combinations of various components, the percentages of all components of the formulations always sum up to 100.

Further, if not otherwise indicated, the reference "to volume" for water indicates that water is added to a total volume of a formulation of 1000 ml (11). For the sake of clarity it is understood that if unclear the density of the formulation is understood as to be 1 g/cm³. Further, if not otherwise indicated, the reference "to 100" for the carrier indicates that the carrier, e.g. water" is added in an amount that the combination adds up to 100 % w/w.

In the context of the present invention aqueous based agrochemical compositions comprise at least 5% of water and include suspension concentrates, aqueous suspensions, suspo-emulsions or capsule suspensions, preferably suspension concentrates and aqueous suspensions.

Further, it is understood, that the preferred given ranges of the application volumes or application rates as well as of the respective ingredients as given in the instant specification can be freely combined and all combinations are disclosed herein, however, in a more preferred embodiment, the ingredients are preferably present in the ranges of the same degree of preference, and even more preferred the ingredients are present in the most preferred ranges.

In one aspect, the invention refers to an adjuvant combination comprising:
a) One or more drift reducing ingredients
b) Optionally one or more rain-fast additives,
c) One or more spreading agents,
d) One or more uptake enhancing agents,
e) other formulants,
f) optionally one or more carriers to 100%.

In a preferred embodiment, no carrier is present. Thus, the invention refers to an adjuvant combination comprising:
a) One or more drift reducing ingredients
b) Optionally one or more rain-fast additives,
c) One or more spreading agents,
d) One or more uptake enhancing agents,
e) other formulants.

If no carrier is present, e4 adds up to 100%.

If not otherwise indicated in the present invention the carrier is usually used to volume the formulation. Preferably, the concentration of carrier in the formulation according to the invention is at least 5 % w/w, more preferred at least 10 % w/w such as at least 20% w/w, at least 40% w/w , at least 50% w/w, at least 60% w/w, at least 70 % w/w and at least 80 % w/w or respectively at least 50 g/l, more preferred at least 100 g/l such as at least 200g/l, at least 400g/l, at least 500g/l, at least 600 g/l, at least 700 g/l and at least 800 g/l.

The adjuvant formulation is preferably used in a spray application to be used on crops.

In a preferred embodiment according to the present invention, also for the following embodiments in the specification, the carrier is mandatory and further preferred the carrier is water.

In a preferred embodiment the formulation of the instant invention comprises
a) One or more drift reducing ingredients,
b) One or more rain-fast additives,
c) One or more spreading agents,
d) One or more uptake enhancing agents,
e1) Optionally a suitable non-ionic surfactant and/or suitable ionic surfactant.,
e2) Optionally, a rheological modifier,
e3) At least one suitable antifoam substance,
e4) Optionally, suitable antifreeze agents,
e5) Optionally, suitable other formulants.

In one preferred embodiment e3 and e4 are mandatory.

In another embodiment at least one of e3, e4 and e5 are mandatory, preferably, at least two of e3, e4 and e5 are mandatory, and in yet another embodiment e1, e2, e3, e4 and e5 are mandatory.

In a preferred embodiment component a) is present in 5 to 25 %, preferably from 10 to 23% g/l, and most preferred from 12 to 18%.

In a preferred embodiment component where b) mandatory, b) is present in 0.1 to 5 %, preferably from 0.2 to 2.5%, and most preferred from 0.5 to .1.5 %.

In a preferred embodiment component c) is present in 25 to 55 %, preferably from 30 to 55 %, and most preferred from 33 to 52 %.

In a preferred embodiment component d) is present in 0.5 to 20 %, preferably from 1.0 to 18 %, and most preferred from 1.5 to 18 %.

In a preferred embodiment component e) is present in 10 to 40, preferably from 12 to 35%, and most preferred from 14 to 35.5 %.

In a preferred embodiment the one or more component e1) is present in 0 to 15 %, preferably from 0,5 to 12 %, and most preferred from 1 to 10 %.

In a preferred embodiment the one or more component e2) is present in 0 to 5 %, preferably from 0.1 to 4 %, and most preferred from 0.2 to 3%.

In a preferred embodiment the one or more component e3) is present in 0.01 to 2 %, preferably from 0.05 to 1.5 %, and most preferred from 0.5 to 1.5%.

In a preferred embodiment the one or more component e4) is present in 5 to 35 %, preferably from 10 to 35 %, and most preferred from 12 to 35 %.

In a preferred embodiment without carrier,e4) adds up to 100%.

In a preferred embodiment the one or more component e5) is present in 0 to 20 %, preferably from 0.01 to 12 %, and most preferred from 0.05 to 8 %.

% of e1 to e5 always refer to the total composition.

In one embodiment the formulation comprises the components a) to f) in the following amounts
a) from 5 to 25 %, preferably from 10 to 23% g/l, and most preferred from 12 to 18%,
b) from 0.1 to 5 %, preferably from 0.2 to 2.5%, and most preferred from 0.5 to .1.5 %,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e) 10 to 40, preferably from 12 to 35%, and most preferred from 14 to 35.5 %,
f) carrier to 100.

In one embodiment the formulation comprises the components a) to f) in the following amounts
a) from 5 to 25 %, preferably from 10 to 23% g/l, and most preferred from 12 to 18%,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e) 10 to 40, preferably from 12 to 35%, and most preferred from 14 to 35.5 %,
f) carrier to 100.

In one embodiment the formulation comprises the components a) to f) in the following amounts
a) from 5 to 25 %, preferably from 10 to 23% g/l, and most preferred from 12 to 18%,
b) from 0.1 to 5 %, preferably from 0.2 to 2.5%, and most preferred from 0.5 to .1.5 %,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e3) from 0.01 to 2 %, preferably from 0.05 to 1.5 %, and most preferred from 0.5 to 1.5%,
e4) to 100%,

In one embodiment the formulation comprises the components a) to f) in the following amounts
a) from 5 to 25 %, preferably from 10 to 23% g/l, and most preferred from 12 to 18%,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e3) from 0.01 to 2 %, preferably from 0.05 to 1.5 %, and most preferred from 0.5 to 1.5%,
e4) to 100%.

In one embodiment the formulation comprises the components a) to f) in the following amounts
a) from 5 to 25 %, preferably from 10 to 23% g/l, and most preferred from 12 to 18%,
b) from 0.1 to 5 %, preferably from 0.2 to 2.5%, and most preferred from 0.5 to .1.5 %,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e1) from 0 to 15 %, preferably from 0,5 to 12 %, and most preferred from 1 to 10 %,
e2) from 0 to 5 %, preferably from 0.1 to 4 %, and most preferred from 0.2 to 3%,
e3) from 0.01 to 2 %, preferably from 0.05 to 1.5 %, and most preferred from 0.5 to 1.5%,
e4) to 100%,
e5) from 0 to 20 %, preferably from 0.01 to 12 %, and most preferred from 0.05 to 8 %.

In one embodiment the formulation comprises the components a) to f) in the following amounts
a) from 5 to 25 %, preferably from 10 to 23% g/l, and most preferred from 12 to 18%,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e1) from 0 to 15 %, preferably from 0,5 to 12 %, and most preferred from 1 to 10 %,
e2) from 0 to 5 %, preferably from 0.1 to 4 %, and most preferred from 0.2 to 3%,
e3) from 0.01 to 2 %, preferably from 0.05 to 1.5 %, and most preferred from 0.5 to 1.5%,
e4) to 100%,
e5) from 0 to 20 %, preferably from 0.01 to 12 %, and most preferred from 0.05 to 8 %.

As indicated above, component f), if present, is always is added to 100%, otherwise component e4 adds up to 100%..

In one embodiment, the instant invention is free of water, i.e. carrier f) is not present. Since some ingredients might contain a minor content of water, it is made clear that free of water means preferably less than 5 % of water, more preferred less than 2.5 % of water, and even more preferred less than 1% of water.

In a further preferred embodiment of the present invention the formulation consists only of the above described ingredients a) to f) in the specified amounts and ranges.

In one embodiment, compound b), as indicated above, is mandatory.

In a preferred embodiment the herbicide is used in combination with a safener, which is preferably selected from the group comprising isoxadifen-ethyl and mefenpyr-diethyl.

In one embodiment the instant invention refers to a tank mix comprising the adjuvant combination of the instant invention and the use of said combinations in tank mixes.

The instant invention further applies to a method of application of the above referenced adjuvant formulations, wherein the resulting tank mix formulation are preferably applied at a spray volume of between 1 and 20 1/ha, preferably 2 and 15 1/ha, more preferably 5 and 15 1/ha.

More preferred, the instant invention applies to a method of application of the above referenced adjuvant formulations, wherein the resulting tank mix formulation is applied at a spray volume of between 1 and 20 l/ha, preferably 2 and 15 l/ha, more preferably 5 and 15 l/ha, and the amount of b) is present in 5 to 250 g/l, preferably from 8 to 120 g/l, and most preferred from 10 to 80 g/l, wherein in a further preferred embodiment a) is present from 5 to 500 g/l, preferably from 10 to 300 g/l, and most preferred from 20 to 200 g/l, and even further preferred c) is present in an amount from 10 to 150 g/l, preferably from 25 to 150 g/l, and most preferred from 30 to 120 g/l, and more preferred also d) is present in an amount from 5 to 250 g/l, preferably from 10 to 100 g/l, and most preferred from 20 to 80 g/l.

In an alternative embodiment the instant invention further applies to a method of application of the above referenced adjuvant formulations, wherein the resulting tank mix formulation are preferably applied at a spray volume of between 50 and 500 l/ha, more preferred between 100 and 250 l/ha.

In another aspect the instant invention applies to a method of application of the above referenced resulting tank mix formulations,
wherein the formulation is applied at a spray volume of between 1 and 20 l/ha, preferably 2 and 15 l/ha, more preferably 5 and 15 l/ha, and
wherein preferably the applied amount of a) to the crop is between 2 and 150 g/ha, preferably between 5 and 120 g/ha, and more preferred between 20 and 100 g/ha.

Further, the drift reducing agent a) is preferably applied from 0.01 g/ha to 50 g/ha, more preferably from 0.1 g/ha to 40 g/ha, and most preferred from 1 g/ha to 30 g/ha.

Further, the spreading agent c) is preferably applied from 5 g/ha to 150 g/ha, more preferably from 7.5 g/ha to 100 g/ha, and most preferred from 10 g/ha to 60 g/ha.

In one embodiment in the applications described above, the active ingredient (ai) of the agrochemical formulation and the resulting tank mix is preferably applied from 2 and 150 g/ha, preferably between 5 and 120 g/ha, and more preferred between 20 and 100 g/ha, while correspondingly the spreading agent is preferably applied from 10 g/ha to 100 g/ha, more preferably from 20 g/ha to 80 g/ha, and most preferred from 40 g/ha to 60 g/ha.

In particular the formulations of the instant invention are useful for application with a spray volume of between 1 and 20 l/ha, preferably 2 and 15 l/ha, more preferably 5 and 15 l/ha on plants or crops with textured leaf surfaces, preferably on wheat, barley, rice, rapeseed, soybean (young plants) and cabbage.

Further, the instant invention refers to a method of treating crops with textured leaf surfaces, preferably wheat, barley, rice, rapeseed, soybean (young plants) and cabbage, with a spray volume of between 1 and 20 l/ha, preferably 2 and 15 l/ha, more preferably 5 and 15 l/ha.

The instant invention also refers to agrochemical adjuvant compositions according to the instant invention for use in tank mixes, wherein the formulation is applied at a spray volume of between 1 and 25 l/ha, preferably 2 and 10 l/ha, more preferably 5 and 15 l/ha.

In a preferred embodiment the above described applications are applied on crops with textured leaf surfaces, preferably on wheat, barley, rice, rapeseed, soybean (young plants) and cabbage.

In one embodiment the active ingredient is a fungicide or a mixture of two fungicides or a mixture of three fungicides.

In another embodiment the active ingredient is an insecticide or a mixture of two insecticides or a mixture of three insecticides.

In yet another embodiment the active ingredient is a herbicide or a mixture of two herbicides or a mixture of three herbicides, wherein preferably in the mixtures on mixing partner is a safener.

Suitable pesticides are listed in the specification below.

In the context of the present invention, suitable formulation types are by definition suspension concentrates, aqueous suspensions, suspo-emulsions or capsule suspensions, emulsion concentrates, water dispersible granules, oil dispersions, emulsifiable concentrates, dispersible concentrates, wettable granules, preferably suspension concentrates, aqueous suspensions, suspo-emulsions and oil dispersions, wherein in the case of non-aqueous formulations or solid formulations the sprayable formulation are obtained by adding water.

### Figures

Figure 1 shows spreadability on rice leaf: (i) is Nativo^{®} SC, (ii) is Nativo^{®} SC mixed with recipe 1.1, (iii) is Nativo^{®} WG mixed with recipe 2, (iv) is Nativo^{®} WG mixed with recipe 3, (v) is Nativo^{®} WG mixed with recipe 4 and (vi) is Nativo^{®} SC mixed with recipe 8 illustrative of the invention respectively
Figure 2 shows particle residue on apple cuticle before and after wash-off test.

### Active ingredients / Pesticides to be used in tank mix applications:

The active compounds identified here by their common names are known and are described, for example, in the pesticide handbook ("The Pesticide Manual" 16th Ed., British Crop Protection Council 2012) or can be found on the Internet (e.g. http://www.alanwood.net/pesticides). The classification is based on the current IRAC Mode of Action Classification Scheme at the time of filing of this patent application.

Examples of fungicides according to the invention are:
1) Inhibitors of the ergosterol biosynthesis, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chloro-cyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{[rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichloro-phenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) mefentrifluconazole, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluoro-phenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole,(1.062)5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-13-[(1,1,2,2-tetrafluoroethyl)sulfanyl]-phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimido-formamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropyl-cyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimido-formamide, (1.081) ipfentrifluconazole, (1.082) 2-[4-(4-chlorophenoxy)-2-(trifluoromethyl)phenyl]-1-(1H-1,2,4-triazol-1-yl)propan-2-ol, (1.083) 2-[6-(4-bromophenoxy)-2-(trifluoromethyl)-3-pyridyl]-1-(1,2,4-triazol-1-yl)propan-2-ol, (1.084) 2-[6-(4-chlorophenoxy)-2-(trifluoromethyl)-3-pyridyl]-1-(1,2,4-triazol-1-yl)propan-2-ol, (1.085) 3-[2-(1-chlorocyclopropyl)-3-(3-chloro-2-fluoro-phenyl)-2-hydroxy-propyl]imidazole-4-carbonitrile, (1.086) 4-[[6-[rac-(2R)-2-(2,4-difluorophenyl)-1,1-difluoro-2-hydroxy-3-(5-thioxo-4H-1,2,4-triazol-1-yl)propyl]-3-pyridyl]oxy]benzonitrile, (1.087) N-isopropyl-N'-[5-methoxy-2-methyl-4-(2,2,2-trifluoro-1-hydroxy-1-phenylethyl)phenyl]-N-methylimidoformamide, (1.088) N'-{5-bromo-2-methyl-6-[(1-propoxypropan-2-yl)oxy]pyridin-3-yl}-N-ethyl-N-methylimido-formamide, (1.089) hexaconazole, (1.090) penconazole, (1.091) fenbuconazole.
2) Inhibitors of the respiratory chain at complex I or II, for example (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3 S)-1,1,3 -trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) inpyrfluxam, (2.029) 3-(difluoromethyl)-1-methyl-N-[(3S)-1,1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)-pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide, (2.057) pyrapropoyne, (2.058) N-[rac-(1S,2S)-2-(2,4-dichlorophenyl)cyclobutyl]-2-(trifluoromethyl)-nicotinamide, (2.059) N-[(1S,2S)-2-(2,4-dichlorophenyl)cyclobutyl]-2-(trifluoromethyl)nicotinamide.
3) Inhibitors of the respiratory chain at complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl} carbamate, (3.030) metyltetraprole, (3.031) florylpicoxamid.
4) Inhibitors of the mitosis and cell division, for example (4.001) carbendazim, (4.002) diethofencarb, (4.003) ethaboxam, (4.004) fluopicolide, (4.005) pencycuron, (4.006) thiabendazole, (4.007) thiophanate-methyl, (4.008) zoxamide, (4.009) pyridachlometyl, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1H-pyrazol-5-amine, (4.014) 4-(2-bromo-4-fluorophenyl)-N-(2-bromophenyl)-1,3-dimethyl-1H-pyrazol-5-amine, (4.015) 4-(2-bromo-4-fluorophenyl)-N-(2-chloro-6-fluorophenyl)-1,3-dimethyl-1H-pyrazol-5-amine, (4.016) 4-(2-bromo-4-fluorophenyl)-N-(2-chlorophenyl)-1,3-dimethyl-1H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1H-pyrazol-5-amine, (4.019) 4-(2-chloro-4-fluorophenyl)-N-(2-chloro-6-fluorophenyl)-1,3-dimethyl-1H-pyrazol-5-amine, (4.020) 4-(2-chloro-4-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1H-pyrazol-5-amine, (4.026) fluopimomide.
5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile.
6) Compounds capable to induce a host defence, for example (6.001) acibenzolar-S-methyl, (6.002) isotianil, (6.003) probenazole, (6.004) tiadinil.
7) Inhibitors of the amino acid and/or protein biosynthesis, for example (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinoline.
8) Inhibitors of the ATP production, for example (8.001) silthiofam.
9) Inhibitors of the cell wall synthesis, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.
10) Inhibitors of the lipid and membrane synthesis, for example (10.001) propamocarb, (10.002) propamocarb hydrochloride, (10.003) tolclofos-methyl.
11) Inhibitors of the melanin biosynthesis, for example (11.001) tricyclazole, (11.002) tolprocarb.
12) Inhibitors of the nucleic acid synthesis, for example (12.001) benalaxyl, (12.002) benalaxyl-M (kiralaxyl), (12.003) metalaxyl, (12.004) metalaxyl-M (mefenoxam).
13) Inhibitors of the signal transduction, for example (13.001) fludioxonil, (13.002) iprodione, (13.003) procymidone, (13.004) proquinazid, (13.005) quinoxyfen, (13.006) vinclozolin.
14) Compounds capable to act as an uncoupler, for example (14.001) fluazinam, (14.002) meptyldinocap.
15) Further fungicides selected from the group consisting of (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.033) 2-(6-benzylpyridin-2-yl)quinazoline, (15.034) dipymetitrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{5-[2-fluoro-6-(prop-2-yn-1-yloxy)-phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-1(5R)-3-[2-(1-1[3,5-bis(difluoro-methyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) ipflufenoquin, (15.042) 2-{2-fluoro-6-[(8-fluoro-2-methylquinolin-3-yl)oxy]phenyl}propan-2-ol, (15.043) fluoxapiprolin, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) quinofumelin, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]-pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1-[(4-methylphenyl)sulfonyl]-3,4-dihydropyrimidin-2(1H)-one, (15.063) aminopyrifen, (15.064) (N'-[2-chloro-4-(2-fluorophenoxy)-5-methylphenyl]-N-ethyl-N-methylimido-formamide), (15.065) (N'-(2-chloro-5-methyl-4-phenoxyphenyl)-N-ethyl-N-methylimidoformamide), (15.066) (2-{2-[(7,8-difluoro-2-methylquinolin-3-yl)oxy]-6-fluorophenyl}propan-2-ol), (15.067) (5-bromo-1-(5,6-dimethylpyridin-3-yl)-3,3-dimethyl-3,4-dihydroisoquinoline), (15.068) (3-(4,4-difluoro-5,5-dimethyl-4,5-dihydrothieno[2,3-c]pyridin-7-yl)quinoline), (15.069) (1-(4,5-dimethyl-1H-benzimidazol-1-yl)-4,4-difluoro-3,3-dimethyl-3,4-dihydroisoquinoline), (15.070) 8-fluoro-3-(5-fluoro-3,3-dimethyl-3,4-dihydroisoquinolin-1-yl)quinolone, (15.071) 8-fluoro-3-(5-fluoro-3,3,4,4-tetramethyl-3,4-dihydroisoquinolin-1-yl)quinolone, (15.072) 3 -(4,4-difluoro-3,3 -dimethyl-3,4-dihydroisoquinolin-1-yl)-8-fluoroquinoline, (15.073) (N-methyl-N-phenyl-4-[5-(trifluoromethyl)-1,2,4-oxadiazol-3-yl]benzamide), (15.074) methyl {4-[5-(trifluoromethyl)-1,2,4-oxadiazol-3-yl]phenyl}carbamate, (15.075) (N-{4-[5-(trifluoromethyl)-1,2,4-oxadiazol-3-yl]benzyl}cyclopropanecarboxamide), (15.076) N-methyl-4-(5-(trifluoromethyl)-1,2,4-oxadiazol-3-yl]benzamide, (15.077) N-[(E)-methoxyimino-methyl]-4-[5-(trifluoromethyl)-1,2,4-oxadiazol-3-yl]benzamide, (15.078) N-[(Z)-methoxyiminomethyl]-4-[5-(trifluoromethyl)-1,2,4-oxadiazol-3-yl]benzamide, (15.079) N-[4-[5-(trifluoromethyl)-1,2,4-oxadiazol-3-yl]phenyl]cyclopropanecarboxamide, (15.080) N-(2-fluorophenyl)-4-[5-(trifluoromethyl)-l,2,4-oxadiazol-3-yl]benzamide, (15.081) 2,2-difluoro-N-methyl-2-[4-[5-(trifluoromethyl)-1,2,4-oxadiazol-3-yl]phenyl]acetamide, (15.082) N-allyl-N-[[4-[5-(trifluoromethyl)-1,2,4-oxadiazol-3-yl)phenyl]methyl]acetamide, (15.083) N-[(E)-N-methoxy-C-methyl-carbonimidoyl]-4-(5-(trifluoro-methyl)-1,2,4-oxadiazol-3-yl]benzamide, (15.084) N-[(Z)-N-methoxy-C-methyl-carbonimidoyl] -4-[5-(trifluoromethyl)-1,2,4-oxadiazol-3-yl]benzamide, (15.085) N-allyl-N-[[4-[5-(trifluoromethyl)-1,2,4-oxadiazol-3-yl]phenyl]methyl]propanamide, (15.086) 4,4-dimethyl-1-[[4-[5-(trifluoromethyl)-1,2,4-oxadiazol-3-yl]phenyl]methyl]pyrrolidin-2-one, (15.087) N-methyl-4-[5-(trifluoromethyl)-1,2,4-oxadiazol-3-yl]benzenecarbothioamide, (15.088) 5-methyl-1-[[4-[5-(trifluoromethyl)-1,2,4-oxadiazol-3-yl]phenyl]methyl]pyrrolidin-2-one, (15.089) N-((2,3-difluoro-4-[5-(trifluoromethyl)-1,2,4-oxadiazol-3-yl]phenyl]methyl]-3,3,3-trifluoro-propanamide, (15.090) 1-methoxy-1-methyl-3-[[4-[5-(trifluoro-methyl}-1,2,4-oxadiazol-3-yl]phenyl]methyl]urea, (15.091) 1,1-diethyl-3-[[4-[5-(trifluoromethyl}-1,2,4-oxadiazol-3-yl]phenyl]methyl]urea, (15.092) N-[[4-[5-(trifluoromethyl)-1,2,4-oxadiazol-3-yl]phen-yl]methyl]propanamide, (15.093) N-methoxy-N-[[4-[5-(trifluoromethyl)-1,2,4-oxadiazol-3-yl]phenyl]-methyl]cyclopropanecarboxamide, (15.094) 1-methoxy-3-methyl-1-[[4-[5-(trifluoromethyl)-1,2,4-oxadiazol-3-yl]phenyl]methyl]urea, (15.095) N-methoxy-N-[[4-[5-(trifluoromethyl)-1,2,4-oxadiazol-3-yl]phenyl]methyl)cyclopropanecarboxamide, (15.096) N,2-dimethoxy-N-[[4-[5-(trifluoromethyl}-1,2,4-oxadiazol-3-yl]phenyl]methyl]propanamide, (15.097) N-ethyl-2-methyl-N-[[4-[5-(trifluoromethyl)-1,2,4-oxadiazol-3-yl)phenyl]methyl]propanamide, (15.098) 1-methoxy-3-methyl-1-[[4-[5-(trifluoro-methyl)-1,2,4-oxadiazol-3-yl]phenyl]methyl]urea, (15.099) 1,3-dimethoxy-1-[[4-[5-(trifluoromethyl)-1,2,4-oxadiazol-3-yl]phenyl]methyl]urea, (15.100) 3-ethyl-1-methoxy-1-[[4-[5-(trifluoromethyl)-1,2,4-oxadiazol-3-yl]phenyl]methyl]urea, (15.101) 1-[[4-[5-(trifluoromethyl)-1,2,4-oxadiazol-3-yl]phenyl]-methyl]piperidin-2-one, (15.102) 4,4-dimethyl-2-[[4-[5-(trifluoromethyl)-1,2,4-oxadiazol-3-yl]phenyl]-methyl]isooxazolidin-3-one, (15.103) 5,5-dimethyl-2-[[4-[5-(trifluoromethyl)-l,2,4-oxadiazol-3 -yl]phenyl]methyl]isoxazolidin-3 -one, (15.104) 3,3-dimethyl-1-[[4-[5-(trifluoromethyl)-1,2,4-oxadiazol-3 -yl]phenyl]methyl]piperidin-2-one, (15.105) 1-[[3-fluoro-4-(5-(trifluoromethyl)-1,2,4-oxadiazol-3-yl]-phenyl]methyl]azepan-2-one, (15.106) 4,4-dimethyl-2-[[4-(5-(trifluoromethyl)-1,2,4-oxadiazol-3-yl]-phenyl]methyl]isoxazolidin-3-one, (15.107) 5,5-dimethyl-2-[[4-[5-(trifluoromethyl)-1,2,4-oxadiazol-3-yl]phenyl]methyl]isoxazolidin-3-one, (15.108) ethyl 1-{4-[5-(trifluoromethyl)-1,2,4-oxadiazol-3-yl]benzyl}-1H-pyrazole-4-carboxylate, (15.109) N,N-dimethyl-1-{4-[5-(trifluoromethyl)-1,2,4-oxadiazol-3-yl]benzyl}-1H-1,2,4-triazol-3-amine, (15.110) N-{2,3-difluoro-4-[5-(trifluoromethyl)-1,2,4-oxadiazol-3-yl]benzyl}butanamide, (15.111) N-(1-methylcyclopropyl)-4-[5-(trifluoromethyl)-1,2,4-oxadiazol-3-yl]benzamide, (15.112) N-(2,4-difluorophenyl)-4-[5-(trifluoromethyl)-1,2,4-oxadiazol-3-yl]benzamide, (15.113) 1-(5,6-dimethylpyridin-3-yl)-4,4-difluoro-3,3-dimethyl-3,4-dihydroisoquinoline, (15.114) 1-(6-(difluoromethyl)-5-methyl-pyridin-3-yl)-4,4-difluoro-3,3-dimethyl-3,4-dihydro-isoquinoline, (15.115) 1-(5-(fluoromethyl)-6-methyl-pyridin-3-yl)-4,4-difluoro-3,3-dimethyl-3,4-dihydroisoquinoline, (15.116) 1-(6-(difluoromethyl)-5-methoxy-pyridin-3-yl)-4,4-difluoro-3,3-dimethyl-3,4-dihydroisoquinoline, (15.117) 4-[5-(trifluoromethyl)-1,2,4-oxadiazol-3-yl]phenyl dimethyl-carbamate, (15.118) N-{4-[5-(trifluoromethyl)-1,2,4-oxadiazol-3-yl]phenyl}propanamide, (15.119) 3-[2-(1-{[5-methyl-3-(trifluoromethyl)-1H-pyrazol-1-yl] acetyl }piperidin-4-yl)-1,3-thiazol-4-yl]-1,5-dihydro-2,4-benzodioxepin-6-yl methanesulfonate, (15.120) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.121) 3-[2-(1-{[3,5-bis(difluoromethyl)-1H-pyrazol-1-yl]acetyl}pipendin-4-yl)-1,3-thiazol-4-yl]-1,5-dihydro-2,4-benzodioxepin-6-yl methanesulfonate, (15.122) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate, (15.123) 1-(6,7-dimethylpyrazolo[1,5-a]pyridin-3-yl)-4,4-difluoro-3,3-dimethyl-3,4-dihydroisoquinoline, (15.124) 8-fluoro-N-(4,4,4-trifluoro-2-methyl-1-phenylbutan-2-yl)quinoline-3-carboxamide, (15.125) 8-fluoro-N-[(2S)-4,4,4-trifluoro-2-methyl-1-phenylbutan-2-yl]quinoline-3-carboxamide, (15.126) N-(2,4-dimethyl-1-phenylpentan-2-yl)-8-fluoroquinoline-3-carboxamide and (15.127) N-[(2S)-2,4-dimethyl-1-phenylpentan-2-yl]-8-fluoroquinoline-3 -carboxamide.

Examples of insecticides according to the invention are:
(1) Acetylcholinesterase(AChE)-inhibitors, e.g. Carbamates Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC and an Xylylcarb, or organophosphates , e.g. Acephat, Azamethiphos, Azinphos-ethyl, Azinphos-methyl, Cadusafos, Chlorethoxyfos, Chlorfenvinphos, Chlormephos, Chlorpyrifos-methyl, Coumaphos, Cyanophos, Demeton-S-methyl, Diazinon, Dichlorvos/DDVP, Dicrotophos, Dimethoat, Dimethylvinphos, Disulfoton, EPN, Ethion, Ethoprophos, Famphur, Fenamiphos, Fenitrothion, Fenthion, Fosthiazat, Heptenophos, Imicyafos, Isofenphos, Isopropyl-O-(methoxyaminothio-phosphoryl)salicylat, Isoxathion, Malathion, Mecarbam, Methamidophos, Methidathion, Mevinphos, Monocrotophos, Naled, Omethoate, Oxydemeton-methyl, Parathion-methyl, Phenthoat, Phorat, Phosalon, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon and and Vamidothion.
(2) GABA-gated chloride channel antagonists, preferably Cyclodien-organochlorine selected from the group of Chlordan and Endosulfan, or Phenylpyrazole (Fiprole) selected from Ethiprol and Fipronil.
(3) Sodium channel modulators / voltage-dependent sodium channel blockers, for example pyrethroids, e.g. Acrinathrin, Allethrin, d-cis-trans Allethrin, d-trans Allethrin, Bifenthrin, Bioallethrin, Bioallethrin S-cyclopentenyl isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans isomers], Deltamethrin, Empenthrin [(EZ)-(1R) isomers), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Permethrin, Phenothrin [(1R)-trans isomer), Prallethrin, Pyrethrine (pyrethrum), Resmethrin, Silafluofen, Tefluthrin, Tetramethrin, Tetramethrin [(1R) isomers)], Tralomethrin and Transfluthrin or DDT or Methoxychlor.
(4) Nicotinic acetylcholine receptor (nAChR) competitive activators, preferably Neonicotinoids selected from Acetamiprid, Clothianidin, Dinotefuran, Imidacloprid, Nitenpyram, Thiacloprid and Thiamethoxam, or Nicotin, or Sulfoximine selected from Sulfoxaflor, or Butenolide selected from Flupyradifurone, or Mesoionics selected from Triflumezopyrim.
(5) Nicotinic acetylcholine receptor (nAChR) allosteric activators, preferably Spinosynes selected from Spinetoram and Spinosad.
(6) Allosteric modulators of the glutamate-dependent chloride channel (GluCl), preferablyAvermectine/Milbemycine selected from Abamectin, Emamectin-benzoate, Lepimectin and Milbemectin.
(7) Juvenile hormone mimetics, preferably Juvenile hormon-analogs selected from Hydropren, Kinopren and Methopren, or Fenoxycarb or Pyriproxyfen.
(8) Various non-specific (multi-site) inhibitors, preferably Alkylhalogenides selected from Methylbromide and other Alkylhalogenides, or Chloropicrin or Sulfurylfluorid or Borax or Tartar emetic or Methylisocyanate generators selected from Diazomet and Metam.
(9) TRPV channel modulators of chordotonal organs selected from Pymetrozin and Pyrifluquinazon.
(10) Mite growth inhibitors selected from Clofentezin, Hexythiazox, Diflovidazin and Etoxazol.
(11) Microbial disruptors of the insect intestinal membrane selected from Bacillus thuringiensis Subspezies israelensis, Bacillus sphaericus, Bacillus thuringiensis Subspezies aizawai, Bacillus thuringiensis Subspezies kurstaki, Bacillus thuringiensis subspecies tenebrionis and B.t.-plant proteins selected from Cry1Ab, Cry1Ac, Cry1Fa, Cry1A.105, Cry2Ab, VIP3A, mCry3A, Cry3Ab, Cry3Bb and Cry34Ab1/35Ab1.
(12) Mitochondrial ATP synthase inhibitors, preferably ATP-disruptors selected from Diafenthiuron, or Organo-tin-compoiunds selected from Azocyclotin, Cyhexatin and Fenbutatin-oxid, or Propargit or Tetradifon.
(13) Decoupler of oxidative phosphorylation by disturbance of the proton gradient selected from Chlorfenapyr, DNOC and Sulfluramid.
(14) Nicotinic acetylcholine receptor channel blocker selected from Bensultap, Cartap-hydrochlorid, Thiocyclam and Thiosultap-Sodium.
(15) Inhibitors of chitin biosynthesis, Typ 0, selected from Bistrifluron, Chlorfluazuron, Diflubenzuron, Flucycloxuron, Flufenoxuron, Hexaflumuron, Lufenuron, Novaluron, Noviflumuron, Teflubenzuron and Triflumuron.
(16) Inhibitors of chitin biosynthesis, Typ 1 selected from Buprofezin.
(17) Molting disruptor (especially dipteras, i.e. two-winged insects) selected from Cyromazin.
(18) Ecdyson receptor agonists selected from Chromafenozid, Halofenozid, Methoxyfenozid and Tebufenozid.
(19) Octopamin-receptor-agonists selected from Amitraz.
(20) Mitochondrial complex III electron transport inhibitors selected from Hydramethylnon, Acequinocyl and Fluacrypyrim.
(21) Mitochondrial complex I electron transport inhibitors, preferably so-called METI-acaricides selected from Fenazaquin, Fenpyroximat, Pyrimidifen, Pyridaben, Tebufenpyrad and Tolfenpyrad, or Rotenon (Derris).
(22) Blocker of the voltage-dependent sodium channel selected from Indoxacarb and Metaflumizone.
(23) Inhibitors of acetyl-CoA carboxylase, preferably tetronic and tetramic acid derivatives selected from Spirodiclofen, Spiromesifen, Spirotetramat and Spidoxamate (IUPAC Name: 11-(4-chloro-2,6-xylyl)-12-hydroxy-1,4-dioxa-9-azadispiro[4.2.4.2]tetradec-11-en-10-one).
(24) Mitochondrial complex IV electron transport inhibitors, preferably Phosphines selected from Aluminiumphosphid, Calciumphosphid, Phosphin and Zinkphosphid, or Cyanides selected from Calciumcyanid, Potassiumcyanid and Sodiumcyanid.
(25) Mitochondrial complex II electron transport inhibitors, preferablybeta-Ketonitrilderivate selected from Cyenopyrafen and Cyflumetofen, or Carboxanilide selected from Pyflubumid.
(28) Ryanodinreceptor-modulators, preferably Diamide selected from Chlorantraniliprol, Cyantraniliprol and Flubendiamid.
(29) Modulators of chordotonal organs (with undefined target structure) selected from Flonicamid.
(30) other active ingredients selected from Acynonapyr, Afidopyropen, Afoxolaner, Azadirachtin, Benclothiaz, Benzoximat, Benzpyrimoxan, Bifenazat, Broflanilid, Bromopropylat, Chinomethionat, Chloroprallethrin, Cryolit, Cyclaniliprol, Cycloxaprid, Cyhalodiamid, Dicloromezotiaz, Dicofol, Dimpropyridaz, epsilon-Metofluthrin, epsilon-Momfluthrin, Flometoquin, Fluazaindolizin, Fluensulfon, Flufenerim, Flufenoxystrobin, Flufiprol, Fluhexafon, Fluopyram, Flupyrimin, Fluralaner, Fluxametamid, Fufenozid, Guadipyr, Heptafluthrin, Imidaclothiz, Iprodione, Isocycloseram, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprol, Tetrachlorantraniliprol, Tigolaner, Tioxazafen, Thiofluoximat and Iodmethan; products from Bacillus firmus (1-1582, BioNeem, Votivo), as well as following compounds: 1-{2-Fluor-4-methyl-5-[(2,2,2-trifluorethyl)sulfinyl]phenyl}-3-(trifluormethyl)-1H-1,2,4-triazol-5-amin (known from WO2006/043635) (CAS 885026-50-6), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (known from WO2003/106457) (CAS 637360-23-7), 2-Chlor-N-[2-{1-[(2E)-3-(4-chlorphenyl)prop-2-en-1-yl]piperidin-4-yl}-4-(trifluormethyl)phenyl]isonicotinamid (known from WO2006/003494) (CAS 872999-66-1), 3-(4-Chlor-2,6-dimethylphenyl)-4-hydroxy-8-methoxy-1,8-diazaspiro[4.5]dec-3-en-2-on (known from WO 2010052161) (CAS 1225292-17-0), 3-(4-Chlor-2, 6-dimethylphenyl)-8-methoxy-2-oxo-1,8-diazaspiro[4.5]dec-3-en-4-yl-ethylcarbonat (known from EP 2647626) (CAS-1440516-42-6), 4-(But-2-in-1-yloxy)-6-(3,5-dimethylpiperidin-1-yl)-5-fluorpyrimidin (known from WO2004/099160) (CAS 792914-58-0), PF1364 (known from JP2010/018586) (CAS-Reg.No. 1204776-60-2), (3E)-3-[1-[(6-Chlor-3-pyridyl)methyl]-2-pyridyliden]-1,1,1-trifluorpropan-2-on (known from WO2013/144213) (CAS 1461743-15-6), N-[3-(Benzylcarbamoyl)-4-chlorphenyl]-1-methyl-3-(pentafluorethyl)-4-(trifluormethyl)-1H-pyrazol-5-carboxamid (known from WO2010/051926) (CAS 1226889-14-0), 5-Brom-4-chlor-N-[4-chlor-2-methyl-6-(methylcarbamoyl)phenyl]-2-(3-chlor-2-pyridyl)pyrazol-3-carboxamid (known from CN103232431) (CAS 1449220-44-3), 4-[5-(3,5-Dichlorphenyl)-4,5-dihydro-5-(trifluormethyl)-3-isoxazolyl]-2-methyl-N-(cis-1-oxido-3-thietanyl)benzamid, 4-[5-(3,5-Dichlorphenyl)-4,5-dihydro-5-(trifluormethyl)-3-isoxazolyl]-2-methyl-N-(trans-1-oxido-3-thietanyl)benzamid and 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (known from WO 2013/050317 A1) (CAS 1332628-83-7), N-[3-Chlor-1-(3-pyndinyl)-1H-pyrazol-4-yl]-N-ethyl-3-[(3,3,3-trifluorpropyl)sulfinyl]propanamid, (+)-N-[3-Chlor-1-(3-pyridinyl)-1H-pyrazol-4-yl]-N-ethyl-3-[(3,3,3-trifluorpropyl)sulfinyl]propanamid and (-)-N-[3-Chlor-1-(3-pyridinyl)-1H-pyrazol-4-yl]-N-ethyl-3-[(3,3,3-trifluorpropyl)sulfinyl]propanamid (known from WO 2013/162715 A2, WO 2013/162716 A2, US 2014/0213448 A1) (CAS 1477923-37-7), 5-[[(2E)-3-Chlor-2-propen-1-yl]amino]-1-[2,6-dichlor-4-(trifluormethyl)phenyl]-4-[(trifluormethyl)sulfinyl]-1H-pyrazol-3-carbonitrile (known from CN 101337937 A) (CAS 1105672-77-2), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, known from CN 103109816 A) (CAS 1232543-85-9); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (known from WO 2012/034403 A1) (CAS 1268277-22-0), N-[2-(5-Amino-1,3,4-thiadiazol-2-yl)-4-chlor-6-methylphenyl]-3-brom-1-(3-chlor-2-pyridinyl)-1H-pyrazol-5-carboxamid (known from WO 2011/085575 A1) (CAS 1233882-22-8), 4-[3-[2,6-Dichlor-4-[(3,3-dichlor-2-propen-1-yl)oxy]phenoxy]propoxy]-2-methoxy-6-(trifluormethyl)pyrimidin (known from CN 101337940 A) (CAS 1108184-52-6); (2E)- and 2(Z)-2-[2-(4-Cyanophenyl)-1-[3-(trifluormethyl)phenyl]ethyliden]-N-[4-(difluormethoxy)phenyl]hydrazincarboxamid (known from CN 101715774 A) (CAS 1232543-85-9); Cyclopropancarbonsäure-3-(2,2-dichlorethenyl)-2,2-dimethyl-4-(1H-benzimidazol-2-yl)phenylester (known from CN 103524422 A) (CAS 1542271-46-4); (4aS)-7-Chlor-2,5-dihydro-2-[[(methoxycarbonyl)[4-[(trifluormethyl)thio]phenyl]amino]carbonyl]indeno[1,2-e][1,3,4]oxadiazin-4a(3H)-carbonsauremethylester (known from CN 102391261 A) (CAS 1370358-69-2); 6-Desoxy-3-O-ethyl-2,4-di-O-methyl-1-[N-[4-[1-[4-(1,1,2,2,2-pentafluorethoxy)phenyl]-1H-1,2,4-triazol-3-yl]phenyl]carbamat]-α-L-mannopyranose (known from US 2014/0275503 A1) (CAS 1181213-14-8); 8-(2-Cyclopropylmethoxy-4-trifluormethylphenoxy)-3-(6-trifluormethylpyridazin-3-yl)-3-azabicyclo[3.2.1]octan (CAS 1253850-56-4), (8-anti)-8-(2-Cyclopropylmethoxy-4-trifluormethylphenoxy)-3-(6-trifluormethylpyridazin-3-yl)-3-azabicyclo[3.2.1]octan (CAS 933798-27-7), (8-syn)-8-(2-Cyclopropylmethoxy-4-trifluormethylphenoxy)-3-(6-trifluormethylpyridazin-3-yl)-3-azabicyclo[3.2.1]octan (known from WO 2007040280 A1, WO 2007040282 A1) (CAS 934001-66-8), N-[3-Chlor-1-(3-pyridinyl)-1H-pyrazol-4-yl]-N-ethyl-3-[(3,3,3-trifluorpropyl)thio]-propanamid (known from WO 2015/058021 A1, WO 2015/058028 A1) (CAS 1477919-27-9) and N-[4-(Aminothioxomethyl)-2-methyl-6-[(methylamino)carbonyl]phenyl]-3-bromo-1-(3-chloro-2-pyridinyl) - 1H-pyrazol-5-carboxamid (known from CN 103265527 A) (CAS 1452877-50-7), 5-(1,3-Dioxan-2-yl)-4-[[4-(trifluormethyl)phenyl]methoxy]-pyrimidin (known from WO 2013/115391 A1) (CAS 1449021-97-9), 3-(4-Chlor-2,6-dimethylphenyl)-8-methoxy-1-methyl-1,8-diazaspiro[4.5]decane-2,4-dion (known from WO 2014/187846 A1) (CAS 1638765-58-8), 3-(4-Chlor-2,6-dimethylphenyl)-8-methoxy-1-methyl-2-oxo-1,8-diazaspiro[4.5]dec-3-en-4-yl-carbonsaureethylester (known from WO 2010/066780 A1, WO 2011151146 A1) (CAS 1229023-00-0), 4-[(5S)-5-(3,5-Dichlor-4-fluorophenyl) -4,5-dihydro-5-(trifluoromethyl)-3-isoxazolyl]-N-[(4R)-2-ethyl-3-oxo-4-isoxazolidinyl]-2-methyl-benzamid (known from WO 2011/067272, WO2013/050302) (CAS 1309959-62-3).

Examples of herbicides according to the invention are:
Acetochlor, acifluorfen, acifluorfen-sodium, aclonifen, alachlor, allidochlor, alloxydim, alloxydim-sodium, ametryn, amicarbazone, amidochlor, amidosulfuron, 4-amino-3-chloro-5-fluoro-6-(7-fluoro-1H-indol-6-yl)pyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bixlozone, bromacil, bromobutide, bromofenoxim, bromoxynil, bromoxynil-butyrate, -potassium, -heptanoate, and -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, 1-{2-chloro-3-[(3-cyclopropyl-5-hydroxy-1-methyl-1H-pyrazol-4-yl)carbonyl]-6-(trifluormethyl)phenyl}piperidin-2-on, 4-{2-chloro-3-[(3,5-dimethyl-1H-pyrazol-1-yl)methyl]-4-(methylsulfonyl)benzoyl}-1,3-dimethyl-1H-pyrazol-5-yl-1,3-dimethyl-1H-pyrazol-4-carboxylat, chlorfenac, chlorfenac-sodium, chlorfenprop, chlorflurenol, chlorflurenol-methyl, chloridazon, chlorimuron, chlorimuron-ethyl, 2-[2-chloro-4-(methylsulfonyl)-3-(morpholin-4-ylmethyl)benzoyl]-3-hydroxycyclohex-2-en-1-on, 4-{2-chloro-4-(methylsulfonyl)-3-[(2,2,2-trifluorethoxy)methyl]benzoyl}-1-ethyl-1H-pyrazol-5-yl-1,3-dimethyl-1H-pyrazol-4-carboxylat, chlorophthalim, chlorotoluron, chlorthal-dimethyl, 3-[5-chloro-4-(trifluormethyl)pyridine-2-yl]-4-hydroxy-1-methylimidazolidine-2-on, chlorsulfuron, cinidon, cinidon-ethyl, cinmethylin, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D, 2,4-D-butotyl, -butyl, - dimethylammonium, -diolamin, -ethyl, -2-ethylhexyl, -isobutyl, -isooctyl, -isopropylammonium, - potassium, -triisopropanolammonium, and -trolamine, 2,4-DB, 2,4-DB-butyl, -dimethylammonium, - isooctyl, -potassium, and -sodium, daimuron (dymron), dalapon, dazomet, n-decanol, desmedipham, detosyl-pyrazolate (DTP), dicamba, dichlobenil, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, 3-(2,6-dimethylphenyl)-6-[(2-hydroxy-6-oxocyclohex-1-en-1-yl)carbonyl]-1-methylchinazolin-2,4(1H,3H)-dion, 1,3-dimethyl-4-[2-(methylsulfonyl)-4-(trifluormethyl)benzoyl]-1H-pyrazol-5-yl-1,3-dimethyl-1H-pyrazol-4-carboxylat, dimetrasulfuron, dinitramine, dinoterb, diphenamid, diquat, diquat-dibromid, dithiopyr, diuron, DMPA, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, ethyl-[(3-{2-chloro-4-fluoro-5-[3-methyl-2,6-dioxo-4-(trifluormethyl)-3,6-dihydropyrimidin-1(2H)-yl]phenoxy}pyridin-2-yl)oxy]acetat, F-9960, F-5231, i.e. N-{2-chloro-4-fluoro-5-[4-(3-fluoropropyl)-5-oxo-4,5-dihydro-1H-tetrazol-1-yl]phenyl}ethanesulfonamide, F-7967, i. e. 3-[7-chloro-5-fluoro-2-(trifluoromethyl)-1H-benzimidazol-4-yl]-1-methyl-6-(trifluoromethyl)pyrimidine-2,4(1H,3H)-dione, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium and -methyl, fluoroglycofen, fluoroglycofen-ethyl, flupropanate, flupyrsulfuron, flupyrsulfuron-methyl-sodium, fluridone, fluro-chloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, - dimethylammonium, -potassium, -sodium, and -trimesium, H-9201, i.e. O-(2,4-dimethyl-6-nitrophenyl) O-ethyl isopropylphosphoramidothioate, halauxifen, halauxifen-methyl ,halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(dimethoxyphosphoryl) ethyl-(2,4-dichlorophenoxy)acetate, 4-hydroxy-1-methoxy-5-methyl-3-[4-(trifluormethyl)pyridine-2-yl]imidazolidine-2-on, 4-hydroxy-1-methyl-3-[4-(trifluormethyl)pyridine-2-yl]imidazolidine-2-on, (5-hydroxy-1-methyl-1H-pyrazol-4-yl)(3,3,4-trimethyl-1,1-dioxido-2,3-dihydro-1-benzothiophen-5-yl)methanon, 6-[(2-hydroxy-6-oxocyclohex-1-en-1-yl)carbonyl]-1,5-dimethyl-3-(2-methylphenyl)chinazolin-2,4(1H,3H)-dion, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxynil-octanoate, -potassium and -sodium, ipfencarbazone, isoproturon, isouron, isoxaben, isoxaflutole, karbutilate, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, keto-spiradox, lactofen, lenacil, linuron, MCPA, MCPA-butotyl, -dimethylammonium, -2-ethylhexyl, - isopropylammonium, -potassium, and -sodium, MCPB, MCPB-methyl, -ethy,1 and -sodium, mecoprop, mecoprop-sodium, and -butotyl, mecoprop-P, mecoprop-P-butotyl, -dimethylammonium, -2-ethylhexyl, and -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, 2-({2-[(2-methoxyethoxy)methyl]-6-(trifluormethyl)pyridin-3-yl}carbonyl)cyclohexan-1,3-dion, methyl isothiocyanate, 1-methyl-4-[(3,3,4-trimethyl-1,1-dioxido-2,3-dihydro-1-benzothiophen-5-yl)carbonyl]-1H-pyrazol-5-ylpropan-1-sulfonat, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-(3-chloro-4-isopropylphenyl)-2-methylpentan amide, NGGC-011, napropamide, NC-310, i.e. [5-(benzyloxy)-1-methyl-1H-pyrazol-4-yl](2,4-dichlorophenyl)-methanone, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxy-carbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimi-sulfan, pyrithiobac, pyrithiobac-sodium, pyroxasulfone, pyroxsulam, quinclorac, quinmerac, quino-clamine, quizalofop, quizalofop-ethyl, quizalofop-P, quizalofop-P-ethyl, quizalofop-P-tefuryl, QYM-201, QYR-301, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-ethoxy-3-methyl-1-oxobut-3-en-2-yl 5-[2-chloro-4-(trifluoromethyl)phenoxy]-2-nitrobenzoate, SYP-300, i.e. 1-[7-fluoro-3-oxo-4-(prop-2-yn-1 -yl)-3,4-dihydro-2H-1,4-benzoxazin-6-yl] -3 -propyl-2- thioxoimidazolidine-4,5-dione, 2,3,6-TBA, TCA (trichloroacetic acid), TCA-sodium, tebuthiuron, tefuryltrione, tembotrione, tepraloxydim, terbacil, terbucarb, terbumeton, terbuthylazin, terbutryn, tetflupyrolimet, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, ZJ-0862, i.e. 3,4-dichloro-N-{2-[(4,6-dimethoxypyrimidin-2-yl)oxy]benzyl}aniline.

The active ingredient is preferably selected from the group comprising fungicides selected from the group comprising classes as described here above (1) Inhibitors of the respiratory chain at complex, in particular azoles, (2) Inhibitors of the respiratory chain at complex I or II, (3) Inhibitors of the respiratory chain at complex, (4) Inhibitors of the mitosis and cell division, (6) Compounds capable to induce a host defence, (10) Inhibitors of the lipid and membrane synthesis, and (15).

Further preferred, the active ingredient as fungicide is selected from the group comprising Trifloxystrobin, Bixafen, Prothioconazole, Inpyrfluxam, Isoflucypram, Fluopicolide, Fluopyram, Fluoxapiprolin, Isotianil.

The insecticide is preferably selected from the group comprising insecticides selected from the group comprising classes as described here above (2 GABA-gated chloride channel antagonists, (3) Sodium channel modulators / voltage-dependent sodium channel blockers (4) (4) Nicotinic acetylcholine receptor (nAChR) competitive activators, (23) Inhibitors of acetyl-CoA carboxylase, (28) Ryanodinreceptor-modulators, (30) other active ingredients.

Also further preferred, the at least one active ingredient as insecticide is selected from the group comprising Spirotetramat, Tetraniliprole, Ethiprole, Imidacloprid, Deltamethrin, Flupyradifuron, Spidoxamat.

Lastly further preferred, the active ingredient as herbicide is selected from the group comprising Triafamone, Tembotrione, Thiencarbazone-methyl, preferably in combination with safeners Isoxadifen-ethyl and Cyprosulfamat.

Even more preferred, the active ingredient is selected from the group comprising trifloxystrobin, bixafen, prothioconazole, inpyrfluxam, isoflucypram, fluopicolide, fluopyram, fluoxapiprolin, isotianil, , spirotetramat, tetraniliprole, ethiprole, , imidacloprid, deltamethrin, flupyradifuron, spidoxamat, triafamone, tembotrione, thiencarbazone-methyl, isoxadifen-ethyl and cyprosulfamat.

All named active ingredients as described here above can be present in the form of the free compound or, if their functional groups enable this, an agrochemically active salt thereof.

Furthermore, mesomeric forms as well as stereoisomeres or enantiomeres, where applicable, shall be enclosed, as these modifications are well known to the skilled artisan, as well as polymorphic modifications.

If not otherwise specified, in the present invention solid, agrochemical active compounds a) are to be understood as meaning all substances customary for plant treatment, whose melting point is above 20°C.

### Drift reducing agents a)

Suitable drift reducing agents are poly(ethylene oxides), wherein the polymer has an average molecular weight preferably from 0.5 to 12 million g/mol, more preferred from 0.75 to 10 million g/mol, and most preferred from 1 to 8 million g/mol, and hydroxypropyl guar, as well as vegetable oils and vegetable oil esters and diesters (including esters with glycerine and propylene glycol).

Particularly preferred are methyl, ethyl, isopropyl, isobutyl, butyl, hexyl and ethylhexyl esters.

More preferred the vegetable oils and esters are selected from the group consisting of methyl oleate, methyl palmitate, rape seed oil methyl ester, isopropyl myristate, isopropyl palmitate, ethylhexyl palmitate, ethylhexyl oleate, mixture of ethylhexyl myristate/laurate, ethylhexyl laurate, mixture of ethylhexyl caprylate/caprate, diisopropyl adipate, coconut oil propyleneglycol diester, sunflower oil, rapeseed oil, corn oil, soybean oil, rice bran oil, olive oil, peanut oil, mixed caprylic and capric triglycerides, and mixed decanoyl and octanoyl glycerides.

In particular preferred are methyl esters of vegetable oils, most preferred rape seed oil methyl ester.

Also suitable as drift reducing agent are mineral oils.

### Rain-fast additives (b):

Suitable rain-fast additives are acrylic based emulsion polymers or polymer dispersions and styrene based emulsion polymers or polymer dispersions d) are aqueous polymer dispersions with a Tg in the range from -100°C to 30°C, preferably between -60°C and 20°C, more preferably between -50°C and 10°C, most preferably between -45°C and 5°C, for example Acronal V215, Acronal 3612, Licomer ADH 205 and Atplus FA. Particularly preferred are Licomer ADH205, and Atplus FA.

Preferably, the polymer is selected from the group consisting of acrylic polymers, styrene polymers, vinyl polymers and derivatives thereof, polyolefins, polyurethanes and natural polymers and derivatives thereof.

More preferably, the polymer is selected from the group consisting of acrylic polymers, styrene butadiene copolymers, styrene-maleic anhydride copolymers, polyvinyl alcohol, polyvinyl acetate, partially hydrolysed polyvinyl acetate, methyl vinyl ether-maleic anhydride copolymers, carboxy-modified polyvinyl alcohol, acetoacetyl-modified polyvinyl alcohol, diacetone-modified polyvinyl alcohol and silicon-modified polyvinyl alcohol, isopropylene-maleic anhydride copolymer, polyurethane, cellulose, gelatine, caesin, oxidised starch, starch-vinyl acetate graft copolymers, hydroxyethyl cellulose, methyl cellulose, ethyl cellulose, carboxymethyl cellulose and acetyl cellulose.

Most preferably the polymer is selected from copolymers of an acrylate and a styrene, wherein . Said acrylate selected from the list comprising 2-ethyl-hexyl acrylate, butyl acrylate, sec-butyl acrylate, ethyl acrylate, methyl acrylate, acrylic acid, acrylamide, iso-butyl acrylate, methyl methacrylate, or combinations thereof. Said styrene selected from the list comprising styrene, tert-butyl styrene, para-methyl styrene, or combinations thereof.

In a preferred embodiment the polymer, as described above, has a molecular weight of no more than 40000, preferably no more than 10000.

In a preferred embodiment the polymer D is an emulsion polymer as described in WO 2017/202684.

The glass transition temperature (Tg) is known for many polymers and is determined in the present invention, if not defined otherwise, according to ASTM E1356-08 (2014) "Standard Test Method for Assignment of the Glass Transition Temperatures by Differential Scanning Calorimetry" wherein the sample is dried prior to DSC at 110°C for one hour to eliminate effect of water and/or solvent, DSC sample size of 10-15 mg, measured from -100°C to 100°C at 20°C/min under N2, with Tg defined as midpoint of the transition region.

### Spreading agents (c):

Suitable spreading agents are selected from the group comprising mono-and diesters of sulfosuccinate metal salts with branched or linear alcohols comprising 1-10 carbon atoms, in particular alkali metal salts, more particular sodium salts, and most particular sodium dioctylsulfosuccinate; as well as organosilicone ethoxylates such as organomodified polysiloxanes/ trisiloxane alkoxylates with the following CAS No. 27306-78-1, 67674-67-3, 134180-76-0, e.g., Silwet^{®} L77, Silwet^{®} 408, Silwet^{®} 806, BreakThru^{®} S240, BreakThru^{®} S278.

Other suitable spreading agents are ethoxylated diacetylene-diols with 1 to 6 EO, e.g. Surfynol^{®} 420 and 440, as well as 1-hexanol, 3,5,5-trimethyl-, ethoxylated, propoxylated (CAS-No 204336-40-3), e.g. Break-Thru^{®} Vibrant.

Preferred are polyalkyleneoxide modified heptamethyltrisiloxane, more preferred selected from the group comprising the siloxane groups Poly(oxy-1,2-ethanediyl),.alpha.-methyl-.omega.-[3-[1,3,3,3-tetramethyl-1-[(trimethylsilyl)oxy]disiloxanyl]propoxy] (CAS No (27306-78-1), , Poly(oxy-1,2-ethanediyl),.alpha.-[3-[1,3,3,3-tetramethyl-1-[(trimethylsilyl)oxy]disiloxanyl]propyl]-.omega.-hydroxy (Cas No 67674-67-3), and Oxirane, methyl-, polymer with oxirane, mono3-1,3,3,3-tetramethyl-1-(trimethylsilyl)oxydisiloxanylpropyl ether (Cas No 134180-76-0).

Preferably the spreading agent is selected from the group comprising sodium dioctylsulfosuccinate, polyalkyleneoxide modified heptamethyltrisiloxane and ethoxylated diacetylene-diols.

### Uptake enhancers (d)

The uptake enhancer may also be selected from the following group of compounds:
Other suitable uptake enhancers are alcohol ethoxylates, preferably selected from the group comprising ethoxylated alcohols, propoxy-ethoxylated alcohols, ethoxylated carboxylic acids, propoxy-ethoxylated carboxylic acids, or ethoxylated mono-, di- or triesters of glycerine comprising fatty acids with 8-18 carbon atoms and an average of 5-40 EO units. Said ethoxylated or propoxy-ethoxylated alcohols or carboxylic acids are optionally further modified by addition of a methyl radical to the remaining alcohol functionality (cf. "Me end-capped"). The term "alcohols" according to d) refers to alcohols that can be branched or linear, saturated or unsaturated, with 6-22 carbon atoms and optionally carry additional substituents, such as OH groups. The term "carboxylic acids" according to d) refers to carboxylic acids that can be branched or linear, saturated or unsaturated, with 6-22 carbon atoms and optionally carry additional substituents, such as OH groups.

Suitable components according to d) by way of example are:
- ethoxylated linear and/or branched fatty alcohols (e.g. Genapol^{®} X-type of Clariant) with 2-20 EO units;
- methyl end-capped, ethoxylated linear and/or branched fatty alcohols (e.g. Genapol^{®} XM-type of Clariant) comprising 2-20 EO units;
- ethoxylated coconut alcohols (e.g. Genapol^{®} C-types of Clariant) comprising 2-20 EO units;
- ethoxylated C12/15 alcohols (e.g. Synperonic^{®} A-types of Croda) comprising 2-20 EO units;
- propoxy-ethoxylated alcohols, branched or linear, e.g. Antarox^{®} B/848 of Solvay, Atlas^{®} G5000 of Croda, Lucramul^{®} HOT 5902 of Levaco;
- propoxy-ethoxylated fatty acids, Me end-capped, e.g. Leofat^{®} OC0503M of Lion;
- alkyl ether citrate surfactants (e.g. Adsee CE range, Akzo Nobel);
- alkylpolysaccharides (e.g. Agnique^{®} PG8107, PG8105 of BASF; Atplus^{®} 438, AL-2559, AL-2575 of Croda);
- ethoxylated mono- or diesters of glycerine comprising fatty acids with 8-18 carbon atoms and an average of 10-40 EO units (e.g. Crovol^{®} product range of Croda);
- castor oil ethoxylates comprising an average of 5-40 EO units (e.g. Berol^{®} range of Nouryon, Emulsogen^{®} EL range of Clariant);
- ethoxylated oleic acid (e.g. Alkamuls^{®} A and AP) comprising 2-20 EO units;
- ethoxylated sorbitan fatty acid esters comprising fatty acids with 8-18 carbon atoms and an average of 10-50 EO units (e.g. Arlatone^{®} T, Tween range).

### Other formulants (e) :

**e1** Suitable non-ionic surfactants or dispersing aids e1) are all substances of this type which can customarily be employed in agrochemical agents. Preferably, polyethylene oxide-polypropylene oxide block copolymers, preferably having a molecular weight of more than 6,000 g/mol or a polyethylene oxide content of more than 45%, more preferably having a molecular weight of more than 6,000 g/mol and a polyethylene oxide content of more than 45%, polyoxyalkylenamine derivatives, polyvinylpyrrolidone, copolymers of polyvinyl alcohol and polyvinylpyrrolidone, and copolymers of (meth)acrylic acid and (meth)acrylic acid esters. Out of the examples mentioned above selected classes can be optionally phosphated, sulphonated or sulphated and neutralized with bases.
   Possible anionic surfactants e1) are all substances of this type which can customarily be employed in agrochemical agents. Alkali metal, alkaline earth metal and ammonium salts of alkylsulphonic or alkylphospohric acids as well as alkylarylsulphonic or alkylarylphosphoric acids are preferred. A further preferred group of anionic surfactants or dispersing aids are alkali metal, alkaline earth metal and ammonium salts of polystyrenesulphonic acids, salts of polyvinylsulphonic acids, salts of alkylnaphthalene sulphonic acids, salts of naphthalene-sulphonic acid-formaldehyde condensation products, salts of condensation products of naphthalenesulphonic acid, phenolsulphonic acid and formaldehyde, and salts of lignosulphonic acid.
**e2** A rheological modifier is an additive that when added to the recipe at a concentration that reduces the gravitational separation of the dispersed active ingredient during storage results in a substantial increase in the viscosity at low shear rates. Low shear rates are defined as 0.1 s⁻¹ and below and a substantial increase as greater than x2 for the purpose of this invention. The viscosity can be measured by a rotational shear rheometer.
   Suitable rheological modifiers e2) by way of example are:
   - Polysaccharides including xanthan gum, and hydroxyethyl cellulose. Examples are Kelzan^{®}, Rhodopol^{®} G and 23, Satiaxane^{®} CX911 and Natrosol^{®} 250 range.
   - Clays including montmorillonite, bentonite, sepeolite, attapulgite, laponite, hectorite. Examples are Veegum^{®} R, Van Gel^{®} B, Bentone^{®} 34, 38, CT, HC, EW, Pangel^{®} M100, M200, M300, S, M, W, Attagel^{®} 50, Laponite^{®} RD,
   - Fumed and precipitated silica, examples are Aerosil^{®} 200, Sipernat^{®} 22.
   Preferred are xanthan gum, montmorillonite clays, bentonite clays and fumed silica.
**e3** Suitable antifoam substances e3) are all substances which can customarily be employed in agrochemical agents for this purpose. Silicone oils, silicone oil preparations are preferred. Examples are Silcolapse^{®} 426 and 432 from Bluestar Silicones, Silfoam^{®} SRE and SC132 from Wacker, SAF-184^{®} from Silchem, Foam-Clear ArraPro-S^{®} from Basildon Chemical Company Ltd, SAG^{®} 1572 and SAG^{®} 30 from Momentive [Dimethyl siloxanes and silicones, CAS No. 63148-62-9]. Preferred is SAG^{®} 1572.
**e4** Suitable antifreeze agents are all substances which can customarily be employed in agrochemical agents for this purpose. Suitable examples are propylene glycol, ethylene glycol, urea and glycerine.
**e5** Suitable other formulants e5) are selected from biocides, colourants, pH adjusters, buffers, stabilisers, antioxidants, inert filling materials, humectants, crystal growth inhibitors, micronutirients by way of example are:
   Possible preservatives are all substances which can customarily be employed in agrochemical agents for this purpose. Suitable examples for preservatives are preparations containing 5-chloro-2-methyl-4-isothiazolin-3-one [CAS-No. 26172-55-4], 2-methyl-4-isothiazolin-3-one [CAS-No. 2682-20-4] or 1.2-benzisothiazol-3(2H)-one [CAS-No. 2634-33-5]. Examples which may be mentioned are Preventol^{®} D7 (Lanxess), Kathon^{®} CG/ICP (Dow), Acticide^{®} SPX (Thor GmbH) and Proxel^{®} GXL (Arch Chemicals).

Possible colourants are all substances which can customarily be employed in agrochemical agents for this purpose. Titanium dioxide, carbon black, zinc oxide, blue pigments, Brilliant Blue FCF, red pigments and Permanent Red FGR may be mentioned by way of example.

Possible pH adjusters and buffers are all substances which can customarily be employed in agrochemical agents for this purpose. Citric acid, sulfuric acid, hydrochloric acid, sodium hydroxide, sodium hydrogen phosphate (Na₂HPO₄), sodium dihydrogen phosphate (NaH₂PO₄), potassium dihydrogen phosphate (KH₂PO₄), potassium hydrogen phosphate (K₂HPO₄), may be mentioned by way of example.

Suitable stabilisers and antioxidants are all substances which can customarily be employed in agrochemical agents for this purpose. Butylhydroxytoluene [3.5-Di-tert-butyl-4-hydroxytoluol, CAS-No. 128-37-0] is preferred.

**Carriers (f)** are those which can customarily be used for this purpose in agrochemical formulations.

A carrier is a solid or liquid, natural or synthetic, organic or inorganic substance that is generally inert, and which may be used as a solvent. The carrier generally improves the application of the compounds, for instance, to plants, plants parts or seeds. Examples of suitable

*solid carriers* include, but are not limited to, ammonium salts, in particular ammonium sulfates, ammonium phosphates and ammonium nitrates, natural rock flours, such as kaolins, clays, talc, chalk, quartz, attapulgite, montmorillonite and diatomaceous earth, silica gel and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks.

Preferred solid carriers are selected from clays, talc and silica.

Examples of suitable *liquid carriers* include, but are not limited to, water, organic solvents and combinations thereof. Examples of suitable *solvents* include polar and nonpolar organic chemical liquids, for example from the classes of
- alcohols and polyols (which may optionally also be substituted, etherified and/or esterified, such as ethanol, propanol, butanol, benzylalcohol, cyclohexanol or glycol, 2-ethyl hexanol),
- ethers such as dioctyl ether, tetrahydrofuran, dimethyl isosorbide, solketal, cyclopentyl methyl ether, solvents offered by Dow under the Dowanol Product Range e.g. Dowanol DPM, anisole, phenetole, different molecular weight grades of dimethyl polyethylene glycol, different molecular weight grades of dimethyl polypropylene glycol, dibenzyl ether
- ketones (such as acetone, methyl ethyl ketone, methyl isobutyl ketone, cyclopentanone, cyclohexanone, cycloheptanone, acetophenone, propiophenone),
- lactate esters, such as methyl lactate, ethyl lactate, propyl lactate, butyl lactate, 2-ethyl hexyl lactate
- (poly)ethers such as different molecular weight grades of polyethylene glycol, different molecular weight grades of polypropylene glycol
- unsubstituted and substituted amines
- amides (such as dimethylformamide, or N,N-dimethyl lactamide, or N-formyl morpholine, or fatty acid amides such N,N-dimethyl decanamide or N,N-dimethyl dec-9-en-amide) and esters thereof
- lactams (such as 2-pyrrolidone, or N-alkylpyrrolidones, such as N-methylpyrrolidone, or N-butylpyrrolidone, or N-octylpyrrolidone, or N-dodecylpyrrolidone or N-methyl caprolactam, N-alkyl caprolactam)
- lactones (such as gamma-butyrolactone, gamma-valerolactone, delta-valerolactone, or alphamethyl gamma-butyrolactone
- sulfones and sulfoxides (such as dimethyl sulfoxide),
- nitriles, such as linear or cyclic alkyl nitriles, in particular acetonitrile, cyclohexane carbonitrile, octanonitrile, dodecanonitrile).
- linear and cyclic carbonates, such as diethyl carbonate, dipropyl carbonate, dibutyl carbonate, dioctyl carbonate, or ethylene carbonate, propylene carbonate, butylene carbonate, glycerine carbonate

Most preferred the carrrier is water.

These spray liquids are applied by customary methods, i.e., for example, by spraying, pouring or injecting, in particular by spraying, and most particular by spraying by UAV.

The application rate of the formulations according to the invention can be varied within a relatively wide range. It is guided by the particular active agrochemicals and by their amount in the formulations.

With the aid of the formulations according to the invention it is possible to deliver active agrochemical to plants and/or their habitat in a particularly advantageous way.

The present invention is also directed to the use of agrochemical compositions according to the invention for the application of the agrochemical active compounds contained to plants and/or their habitat.

With the formulations of the invention it is possible to treat all plants and plant parts. By plants here are meant all plants and plant populations, such as desirable and unwanted wild plants or crop plants (including naturally occurring crop plants). Crop plants may be plants which can be obtained by conventional breeding and optimization methods or by biotechnological and gene-technological methods or combinations of these methods, including the transgenic plants and including the plant cultivars which can or cannot be protected by varietal property rights. By plant parts are to be meant all above-ground and below-ground parts and organs of the plants, such as shoot, leaf, flower and root, an exemplary listing embracing leaves, needles, stems, trunks, flowers, fruit bodies, fruits and seeds and also roots, tubers and rhizomes. The plant parts also include harvested material and also vegetative and generative propagation material.

What may be emphasized in this context is the particularly advantageous effect of the formulations according to the invention with regard to their use in cereal plants such as, for example, wheat, oats, barley, spelt, triticale and rye, but also in maize, sorghum and millet, rice, sugar cane, soya beans, sunflowers, potatoes, cotton, oilseed rape, canola, tobacco, sugar beet, fodder beet, asparagus, hops and fruit plants (comprising pome fruit such as, for example, apples and pears, stone fruit such as, for example, peaches, nectarines, cherries, plums and apricots, citrus fruits such as, for example, oranges, grapefruits, limes, lemons, kumquats, tangerines and satsumas, nuts such as, for example, pistachios, almonds, walnuts and pecan nuts, tropical fruits such as, for example, mango, papaya, pineapple, dates and bananas, and grapes) and vegetables (comprising leaf vegetables such as, for example, endives, corn salad, Florence fennel, lettuce, cos lettuce, Swiss chard, spinach and chicory for salad use, cabbages such as, for example, cauliflower, broccoli, Chinese leaves, Brassica oleracea (L.) convar. acephala var. sabellica L. (curly kale, feathered cabbage), kohlrabi, Brussels sprouts, red cabbage, white cabbage and Savoy cabbage, fruit vegetables such as, for example, aubergines, cucumbers, capsicums, table pumpkins, tomatoes, courgettes and sweetcorn, root vegetables such as, for example celeriac, wild turnips, carrots, including yellow cultivars, Raphanus sativus var. niger and var. radicula, beetroot, scorzonera and celery, legumes such as, for example, peas and beans, and vegetables from the Allium family such as, for example, leeks and onions.

The treatment of the plants and plant parts in accordance with the invention with the inventive formulations is carried out directly or by action on their environment, habitat or storage area in accordance with the customary treatment methods, for example by dipping, spraying, vaporizing, atomizing, broadcasting or painting on and, in the case of propagation material, especially seeds, additionally by single or multiple coating.

The active agrochemicals comprised develop a better biological activity than when applied in the form of the corresponding conventional formulations.

If not otherwise defined in this application, the molecular weight refers to the weight-average molecular weight Mw which is determined by GPC in methylene chloride at 25 °C with polystyrene as the standard.

### Materials Tables

**Table MAT1: Exemplified trade names and CAS-No's of preferred drift reducing materials - Polymers (b)**

| Product | Chemical name | Cas No. | Supplier |
|---|---|---|---|
| Polyox^{®} WSR N12K | Poly(ethylene oxide) (average molecular weight 1million g/mol) | 25322-68-3 | Dupont |
| Polyox^{®} WSR N60K | Poly(ethylene oxide) (average molecular weight 2million g/mol) | 25322-68-3 | Dupont |
| Polyox^{®} WSR 301 | Poly(ethylene oxide) (average molecular weight 4million g/mol) | 25322-68-3 | Dupont |
| Polyox^{®} WSR 308 | Poly(ethylene oxide) (average molecular weight 8million g/mol) | 25322-68-3 | Dupont |
| AgRho^{®} DR2000 | hydroxypropyl guar | 68442-94-4. 39421-75-5 | Solvay |
| Jaguar^{®} HP-120 | hydroxypropyl guar | 68442-94-4. 39421-75-5 | Solvay |
| Jaguar^{®} HP-8 | hydroxypropyl guar | 68442-94-4. 39421-75-5 | Solvay |
| Jaguar^{®} 308 NB | hydroxypropyl guar | 68442-94-4. 39421-75-5 | Solvay |

**Table MAT2: Exemplified trade names and CAS-No's of preferred drift reducing materials a) - Oils**

| Product | Chemical name | Cas No. | Supplier |
|---|---|---|---|
| Radia^{®} 7060 | methyl oleate | 112-62-9 | Oleon NV, BE |
| Radia^{®} 7120 | methyl palmitate | 112-39-0 | Oleon NV, BE |
| AGNIQUE ME^{®} 18 RD-F, Edenor^{®} MESU | Rape seed oil methyl ester | 67762-38-3. 85586-25-0 | Clariant BASF |
| Crodamol^{®} EO | ethyl oleate | 111-62-6 | Croda |
| Estol^{®} 1514 Crodamol^{®} IPM | iso-propyl myristate | 110-27-0 | Croda |
| Radia^{®} 7732 Crodamol^{®} IPP | iso-propyl palmitate | 142-91-6 | Oleon NV, BE Croda, UK |
| Radia^{®} 7129 Crodamol^{®} OP | ethylhexyl palmitate | 29806-73-3 | Oleon NV, BE Croda, UK |
| Radia^{®} 7130 | ethylhexyl oleate | 26399-02-0 | Oleon NV, BE |
| Radia^{®} 7128 | ethylhexyl myristate/laurate C12/C14 | 29806-75-5 | Oleon NV, BE |
| Radia^{®} 7127 | ethylhexyl laurate | 20292-08-4 | Oleon NV, BE |
| Radia^{®} 7126 | ethylhexyl caprylate/caprate C8/10 | 63321-70-0 | Oleon NV, BE |
| Crodamol DA | di-isopropyl adipate | 6938-94-9 | Croda |
| Crodamol PC DAB | Propyleneglycol di-ester of coconut fatty acids | 85409-09-2 | Croda |
| Sunflower oil | Triglycerides from different C14-C18 fatty acids, predominantly unsaturated | 8001-21-6 | |
| Rapeseed oil | Triglycerides from different C14-C18 fatty acids, predominantly unsaturated | 8002-13-9 | |
| Corn oil | Triglycerides from different C14-C18 fatty acids, predominantly unsaturated | 8001-30-7 | |
| Soybean oil | Triglycerides from different C14-C18 fatty acids, predominantly unsaturated | 8001-22-7 | |
| Rice bran oil | Triglycerides from different C14-C18 fatty acids, predominantly unsaturated | 68553-81-1 | |
| Olive oil | | | |
| Peanut oil | | | |
| Radia^{®} 7104 | Caprylic, capric triglycerides, neutral vegetable oil | 73398-61-5. 65381-09-1 | Oleon NV, BE |
| Miglyol 812N | Glycerides, mixed decanoyl and octanoyl | 73398-61-5. 65381-09-1 | IOI Oleochemical |
| Exxsol^{®} D80 | Hydrotreated light distillates (petroleum) | 64742-47-8 | Exxon Mobil |
| Exxsol^{®} D100 | Hydrotreated light distillates (petroleum) | 64742-47-8 | Exxon Mobil |
| Solvesso^{®} 200ND | Solvent naphtha (petroleum), heavy aromatic, naphthalene depleted | 64742-94-5 | ExxonMobil |
| Kristol^{®} M14 Marcol^{®} 82 Ondina^{®} 917 | White mineral oil (petroleum), C14-C30 branched and linear | 8042-47-5 | Carless ExxonMobil Shell |
| Exxsol^{®}D130 Banole^{®} 50 | White mineral oil (petroleum) | 64742-46-7 | ExxonMobil Total |
| Genera^{®}-12 | White mineral oil (petroleum) | 72623-86-0 | Total |
| Genera^{®}-9 | White mineral oil (petroleum) | 97862-82-3 | Total |
| Genera^{®}-9 | White mineral oil (petroleum) | 97862-82-3 | Total |
| Solvesso^{®} 200ND | Mixture of aromatic hydrocarbons (C9-C11), naphthalene depleted | 64742-94-5 | ExxonMobil |
| Genera^{®}-9 | White mineral oil (petroleum) | 97862-82-3 | Total |
| BANOL | Paraffinic mineral oil | 64742-46-7 | Total |
| ENSPRAY N (SK Oil) | Severely hydrotreated heavy paraffinic distillates | 64742-5+7 | SK Corporation |

**Table MAT5: Exemplified trade names of preferred wash-off reducing materials b)**

| Product | Chemical name | Tg | MFFT | Supplier |
|---|---|---|---|---|
| Atplus^{®} FA | Aqueous styrene acrylic copolymer emulsion dispersion | <30°C | | Croda |
| Acronal^{®} V215 | aqueous acrylate co-polymer dispersion containing carboxylic groups. | - 43°C | | BASF |
| Acronal^{®} V115 | | - 58°C | | |
| Acronal^{®} A245 | | - 45°C | | |
| Acronal^{®} A240 | | - 30°C | | |
| Acronal^{®} A225 | | - 45°C | | |
| Acronal^{®} A145 | | - 45°C | | |
| Acronal^{®} 500 D | aqueous acrylic co-polymer | - 13°C | | BASF |
| Acronal^{®} S 201 | dispersion | - 25°C | | |
| Acronal^{®} DS 3618 | aqueous acrylic ester co-polymer dispersion | - 40°C | | BASF |
| Acronal^{®} 3612 | | +12°C | | |
| Acronal^{®} V 212 | | - 40°C | | |
| Acronal^{®} DS 3502 | | + 4°C | | |
| Acronal^{®} S 400 | | - 8°C | | |
| Licomer^{®} ADH205 | aqueous acrylic ester co-polymer dispersion containing carboxylic groups. | <30°C | | Michelman |
| Licomer^{®} ADH203 | | | | |
| Primal^{®} CM-160 | Aqueous acrylic copolymer emulsion polymer | | | DOW |
| Primal^{®} CM-330 | | | | |
| Axilat^{®} UltraGreen 5500 | Aqueous acrylic emulsion polymer | - 15°C | 0°C | Synthomer |
| Povol^{®} 26/88 | Polyvinyl alcohol | | | Kuraray |
| Gohsenex AGW-200 | Denatured polyvinyl alcohol | | | Nippon Syntehtic chemical industry |

**Table MAT3: Exemplified trade names and CAS-No's of preferred high-spreading compounds c)**

| Product | Chemical name | Cas No. | Supplier |
|---|---|---|---|
| Geropon^{®} DOS-PG | Dioctylsulfosuccinate sodium salt (65-70% in propylene glycol) | 577-11-7 | Rhodia |
| Synergen^{®} W 10 | Dioctylsulfosuccinate sodium salt (65-70% in propylene glycol) | 577-11-7 | Clariant |
| Aerosol^{®} OT 70 PG | Dioctylsulfosuccinate sodium salt (65-70% in propylene glycol) | 577-11-7 | Cytec |
| Lankropol KPH70 | Dioctylsulfosuccinate sodium salt (65-70% in propylene glycol) | 577-11-7 | Nouryon |
| Enviomet EM 5669 | Dioctylsulfosuccinate sodium salt (65-70% in propylene glycol) | 577-11-7 | Innospec |
| Surfynol^{®} S420 | 2,4,7,9-Tetramethyl-5-Decyne-4,7-Diol ethoxylate (1 mole) | 9014-85-1 | Evonik |
| Surfynol^{®} S440 | 2,4,7,9-Tetramethyl-5-Decyne-4,7-Diol ethoxylate (3.5 moles) | 9014-85-1 | Evonik |
| Surfynol^{®} S465 | 2,4,7,9-Tetramethyl-5-Decyne-4,7-Diol ethoxylate (10 moles) | 9014-85-1 | Evonik |
| Surfynol^{®} S485 | 2,4,7,9-Tetramethyl-5-Decyne-4,7-Diol ethoxylate (30 moles) | 9014-85-1 | Evonik |
| Break-Thru^{®} Vibrant | 1-Hexanol, 3,5,5-trimethyl-, ethoxylated, propoxylated | 204336-40-3 | Evonik |
| Genapol^{®} EP 0244 | C10-12 alcohol alkoxylate (PO+EO) | | Clariant |
| Synergen^{®} W06 | C11 alcohol alkoxylate (PO+EO) | | Clariant |
| Genapol^{®} EP 2584 | C12-15 alcohol alkoxylate (PO+EO) | | Clariant |
| Agnique^{®} PG8107 | Oligomeric D-glucopyranose decyl octyl glycosides | 68515-73-1 | BASF |
| Silwet^{®} L77 | 3 -(2-methoxyethoxy)propyl-methyl-bis(trimethylsilyloxy)silane | 27306-78-1 | Momentive |
| Silwet^{®} 408 | 2-[3-[[dimethyl(trimethylsilyloxy)silyl]o xy-methyl-trimethylsilyloxysilyl]propoxy]etha nol | 67674-67-3 | Momentive |
| Silwet^{®} 806 | 3-[methyl-bis(trimethylsilyloxy)silyl]propan-1-ol;2-methyloxirane;oxirane | 134180-76-0 | Momentive |
| Break-thru^{®} S240 | 3-[methyl-bis(trimethylsilyloxy)silyl]propan-1-ol;2-methyloxirane;oxirane | 134180-76-0 | Evonik |
| Break-thru^{®} S278 | 3 -(2-methoxyethoxy)propyl-methyl-bis(trimethylsilyloxy)silane | 27306-78-1 | Evonik |
| Silwet^{®} HS 312 | Polyalkyleneoxide silane | Not disclosed | Momentive |
| Silwet^{®} HS 604 | Poly(oxy-1,2-ethanediyl), alpha-(3-(dimethyl(2-(trimethylsilyl)ethyl)silyl)propyl)-omega-methoxy- | 881689-05-0 | Momentive |
| BreakThru^{®} OE 444 | Siloxanes and Silicones, cetyl Me, di-Me | 191044-49-2 | Evonik |

**Table MAT4: Exemplified trade names and CAS-No's of preferred uptake enhancing compounds d)**

| Product | Chemical name | Cas No. | Supplier |
|---|---|---|---|
| Emulsogen^{®} EL 400 | Ethoxylated Castor Oil with 40 EO | 61791-12-6 | Clariant |
| Etocas^{®} 10 | Ethoxylated Castor Oil with 10 EO | 61791-12-6 | Croda |
| Crovol^{®} CR70G | fats and glyceridic oils, vegetable, ethoxylated | 70377-91-2 | Croda |
| Synperonic^{®} A3 | alcohol ethoxylate (C12/C15-EO3) | 68131-39-5 | Croda |
| Synperonic^{®} A7 | alcohol ethoxylate (C12/C15-EO7) | 68131-39-5 | Croda |
| Genapol^{®} X060 | alcohol ethoxylate (iso-C13-EO6) | 9043-30-5 | Clariant |
| Alkamuls^{®} A | Oleic acid, ethoxylated | 9004-96-0 | Solvay |
| Lucramul^{®} HOT 5902 | alcohol ethoxylate-propoxylate | 64366-70-7 | Levaco |
| Antarox B/848 | Butyl alcohol propoxylate/ethoxylate | 9038-95-3 | Solvay |
| Tween^{®} 80 | Sorbitan monooleate, ethoxylated (20EO) | 9005-65-6 | Croda |
| Tween^{®} 85 | Sorbitan trioleate, ethoxylated (20EO) | 9005-70-3 | Croda |
| Tween^{®} 20 | Sorbitan monolaurate, ethoxylated (20EO) | 9005-64-5 | Croda |
| Genapol C 100 | Alcohols, coco, ethoxylated | 61791-13-7 | Clariant |

**Table MAT6: Exemplified trade names and CAS-No's of preferred compounds e)**

| Product | Chemical name | Cas No. | Supplier |
|---|---|---|---|
| Synperonic^{®} PE/F127 | block-copolymer of polyethylene oxide and polypropylene oxide | 9003-11-6 | Croda |
| Synperonic^{®} PE/L62 | block-copolymer of polyethylene oxide and polypropylene oxide | 9003-11-6 | Croda |
| Synperonic^{®} 13/7-85 | Alcohols, C11-14-iso-, C13-rich, ethoxylated | 78330-21-9 | Croda |
| SAG^{®} 1572 | Dimethyl siloxanes and silicones | 63148-62-9 | Momentive |
| SAG^{®} 1538 | Dimethyl siloxanes and silicones | 63148-62-9 | Momentive |
| SAG^{®} 1500 | Dimethyl siloxanes and silicones | 63148-62-9 | Momentive |
| Aerosil R972 | Silane, dichlorodimethyl-, reaction products with silica | 68611-44-9 | Evonik |
| Silcolapse^{®} 454 | Polydimethylsiloxanes and silica | 9016-00-6 | Bluestar Silicones |
| Silcolapse^{®} 426R | Polydimethylsiloxanes and silica | 9016-00-6 | Bluestar Silicones |
| Rhodorsil^{®} Antim EP 6703 | absorbed poly(dimethylsiloxane) antifoam | unknown | Solvay |
| Propylene glycol | 1,2-Propylene glycol | 57-55-6 | |
| Glycerine | Propane-1,2,3-triol | 56-81-5 | |
| Urea | CH₄N₂O | 57-13-6 | |
| Phosphoric acid | H₃PO₄ | 7664-38-2 | |
| Sodium hydrogen phosphate | Na₂HPO₄ | 7558-79-4 | |
| Sodium dihydrogen phosphate | NaH₂PO₄ | 7558-80-7 | |
| Citric Acid | C₆H₈O₇ | 77-92-9 | |
| Rhodopol^{®} 23 | Polysaccharide | 11138-66-2 | Solvay |
| Xanthan | Polysaccharide | 11138-66-2 | |
| Van Gel^{®} B | Smectite-group minerals | 12199-37-0 | Vanderbilt |
| Veegum^{®} R | | | |
| Sipernat^{®} 22 S | synthetic amorphous silica (silicon dioxide) | 112926-00-8 7631-86-9 | Evonik |
| Proxel^{®} GXL | 1.2-benzisothiazol-3(2H)-one | 2634-33-5 | Arch Chemicals |
| Kathon^{®} CG/ICP | 5-chloro-2-methyl-4-isothiazolin-3-one plus 2-methyl-4-isothiazolin-3-one | 26172-55-4 plus 2682-20-4 | Dow |
| Acticide^{®} MBS | Mixture of 2-methyl-4-isothiazolin-3-one (MIT) and 1,2-benzisothiazolin-3-one (BIT) in water | 2682-20-4 2634-33-5 | Thor GmbH |

### EXAMPLES

### Example 1 Sample preparation

### Recipe 1, Recipe 2 and Recipe 3

22 g of Synperonic^{®} 13/7-85 and 15 g of Crovol^{®} CR70G were added into 163 g of AGNIQUE ME^{®} 18 RD-F, to prepare 200 g of premix. 20.00 g of the premix of AGNIQUE ME^{®} 18 RD-F, 50 g of Silwet^{®} 806, 10 g of Synperonic^{®} PE/L62 and 1 g of SAG^{®} 1572 were added into 19 g of Propylene glycol and then the solution was stirred for 1 hour at room temperature to prepare 100 g of recipe 1. Recipe 2 and recipe 3 were prepared by using same procedure as recipe 1.

### Recipe 4, Recipe 5, Recipe 6 and Recipe 7

20.00 g of the premix of AGNIQUE ME^{®} 18 RD-F described on the sample preparation of recipe 1, 50 g of Silwet^{®} 806, 10 g of Synperonic^{®} PE/L62, 5 g of Geropon^{®} DOS-PG and 1 g of SAG^{®} 1572 were added into 14 g of Propylene glycol and then the solution was stirred for 1 hour at room temperature to give 100 g of recipe 4. Recipe 5, recipe 6 and recipe 7 were prepared by using same procedure as recipe 4.

### Recipe 8

1 g of Atplus^{®} FA was weighed in a vessel. 17.75 g of Propylene glycol was added into it and stirred for 10 min at room temperature. 50 g of Silwet^{®} 806, 20.00 g of the premix of AGNIQUE ME^{®} 18 RD-F described on the sample preparation of recipe 1, 1 g of SAG^{®} 1572, 10 g of Synperonic^{®} PE/L62 and 0.25 g of 85 % Phosphoric acid sequentially and then the solution was stirred for 2 hours at room temperature to give 100 g of recipe 8.

**Table 1: Recipes**

| Component (%w/w) | Fun ctio n | Recipe number illustrative of the invention | | | | | | | |
|---|---|---|---|---|---|---|---|---|---|
| | | 1 | 2 | 3 | 4 | 5 | 6 | 7 | 8 |
| Silwet^{®} 806 | c) | 50.00 | 35.00 | 35.00 | 50.00 | 35.00 | 35.00 | 35.00 | 50.00 |
| Geropon^{®} DOS-PG | c) | --- | --- | --- | 5.00 | 5.00 | 5.00 | 5.00 | --- |
| AGNIQUE ME^{®} 18 RD-F | a), d) | 16.30 | 16.30 | 16.30 | 16.30 | 28.50 | 20.4 | 12.2 | 16.30 |
| Atplus^{®} FA | b) | --- | --- | --- | --- | --- | --- | --- | 1.00 |
| SAG^{®} 1572 | e) | 1.00 | 1.00 | 1.00 | 1.00 | 1.00 | 1.00 | 1.00 | 1.00 |
| Synperonic^{®} PE/L62 | e) | 10.00 | 10.00 | 10.00 | 10.00 | 10.00 | 10.00 | 10.00 | 10.00 |
| Synperonic^{®} 13/7-85 | e) | 2.20 | 2.20 | 2.20 | 2.20 | 3.8 | 2.7 | 1.6 | 2.20 |
| Crovol^{®} CR70G | d), e) | 1.50 | 1.50 | 16.50 | 1.50 | 2.7 | 11.9 | 21.1 | 1.50 |
| 85 % Phosphoric acid | e) | --- | --- | --- | --- | --- | --- | --- | 0.25 |
| Propylene glycol | f) | 19.00 | 34.00 | 19.00 | 14.00 | 14.00 | 14.00 | 14.10 | 17.75 |
| Total | | 100.0 0 | 100.0 0 | 100.0 0 | 100.0 0 | 100.0 0 | 100.0 0 | 100.0 0 | 100.0 0 |

The adjuvant aforementioned recipes were tested with the following commercial products. Nativo^{®} SC is produced by Bayer AG and contains 200 g/l of tebuconazole and 100 g/l trifloxystrobin for the control of fungal disease. Nativo^{®} WG is produced by Bayer AG and contains 500 g/kg of tebuconazole and 250 g/kg of trifloxystrobin for the control of fungal disease.

Folicur ^{®} SC is produced by Bayer AG and contains 430 g/l of tebuconazole for the control of fungal disease. Movento^{®} SC is produced by Bayer AG and contains 240 g/l of spirotetramate for the control of insects.

Aforementioned commercial products were dispersed in water at the rates in l/ha or kg/ha and in spray volumes 1/ha as indicated. To a second dilution of these commercial products the adjuvant aforementioned recipes according to the invention were added at a rate of 0.1 l/ha and the dilution used for the tests below.

### Example 2 Physical compatibility test

### Method for physical compatibility test

Test method was modified based on ASTM E1518-05 (Reapproved 2021) "Standard Practice for Evaluation of Physical Compatibility of Pesticides in Aqueous Tank Mixtures by the Dynamic Shaker Method".

4 g of Nativo^{®} WG in 200 g of CIPAC D standard water in 300 ml Erlenmeyer flask were stirred by magnetic stirrer until given homogeneous dilution. Prepared recipe 1 illustrative of the invention was added into the resulting Nativo WG dilution and then the solution was vigorously shaken 30 minutes (shaking intensity was set ca. 180-200 times/min) by using a mechanical shaker.

The dilution stands at room temperature for 24 hours to evaluate a volume of foam, optical observation to find out persistent foam, creaming, sedimentation, phase separation after 0, 1, 2, 4 and 24 hours. After standing 24 hours, the solution was gently swirl to disperse sedimentation and then poured on 150 µm sieves and the Erlenmeyer flask was washed by 50 ml of CIPAC D standard water and then the solution was also poured on the sieves to evaluation whether lumps which may cause clogging during spraying were existing or not.

### Results

The inspection results based on definitions on table 2-1 shows no significant physical compatibility issues by addition of recipe 1 which showed slightly less foam than Nativo WG itself.

**Table 2-1 Definitions and Score (0, 1, 2 and 3) for inspections**

| | Score 0 | Score 1 | Score 2 | Score 3 |
|---|---|---|---|---|
| | Good | Acceptable | Cautions | Unacceptable |
| **Persistent foam** | Almost no foam. | =< 10 ml foam | < 50 ml foam | >= 50 ml foam |
| **Phase Separation** | No separation after 24 hours. | Small separation after 24 hours. | Starting separation after 4 hours and clear separation after 24 hours but redispersible | Clearly changed after less than 2 hours and the separation, creaming and/or sedimentation are irreversible after 24 hours. |
| **Creaming and/or Sedimentation** | No change after 4 and 24 hours. | Small change after 4 and 24 hours but dispersible / emulsifiable by gently shaking. | Clearly changed after 4 and 24 hours but redispersible / emulsifiable after 24 hours by gently shaking. | |
| **Residue on sieve** | Rinsable residue on sieves and redispersible. No remaining on the bottle wall. | | Small Residue on 150 µm sieves size and/or on the bottle wall was found but it might occur no issue. | Non-rinsable reside on 150 and 200 microns sieves size |

**Table 2-2 Result of inspection with score 0, 1, 2 and 3**

| | Persistent foam | Phase separation | | Creaming | Sedimentation | Residue on 150 µm sieves |
|---|---|---|---|---|---|---|
| | 1 hours after | 4 hours after | 24 hours after | 24 hours after | 24 hours after | 24 hours after |
| Nativo^{®} WG | 2 | 0 | 1 | 0 | 1 | 1 |
| Nativo^{®} WG mixed with recipe 1 | 1 | 0 | 1 | 0 | 1 | 1 |

### Example 3 Apple cuticle penetration

### Method for Cuticle penetration test

The cuticle penetration test is a further developed and adapted version of the test method SOFU (simulation of foliar uptake) originally described by Schönherr and Baur (Schönherr, J., Baur, P. (1996), Effects of temperature, surfactants and other adjuvants on rates of uptake of organic compounds. In: The plant cuticle - an integrated functional approach, 134-155. Kerstiens, G. (ed.), BIOS Scientific publisher, Oxford); it is well suited for systematic and mechanistic studies on the effects of formulations, adjuvants and solvents on the penetration of agrochemicals.

Apple leaf cuticles were isolated from leaves taken from trees growing in an orchard as described by Schönherr and Riederer (Schönherr, J., Riederer, M. (1986), Plant cuticles sorb lipophilic compounds during enzymatic isolation. Plant Cell Environ. 9, 459-466). Only the astomatous cuticular membranes of the upper leaf surface lacking stomatal pores were obtained. Discs having diameters of 18 mm were punched out of the leaves and infiltrated with an enzymatic solution of pectinase and cellulase. The cuticular membranes were separated from the digested leaf cell broth, cleaned by gently washing with water and dried. After storage for about four weeks the permeability of the cuticles reaches a constant level and the cuticular membranes are ready for the use in the penetration test.

The cuticular membranes were applied to diffusion vessels. The correct orientation is important: the inner surface of the cuticle should face to the inner side of the diffusion vessel. A spray was applied in a spray chamber to the outer surface of the cuticle. The diffusion vessel was turned around and carefully filled with acceptor solution. Aqueous mixture buffered to pH 5.5 was used as acceptor medium to simulate the apoplast as natural desorption medium at the inner surface of the cuticle.

The diffusion vessels filled with acceptor and stirrer were transferred to a temperature-controlled stainless steel block which ensures not only a well-defined temperature but also a constant humidity at the cuticle surface with the spray deposit. The temperature at the beginning of experiments was 25°C, 30°C or 35°C and kept constant or changed to 35°C 24h after application at constantly 60% relative humidity.

An autosampler took aliquots of the acceptor in regular intervals and the content of active ingredient is determined by HPLC (DAD or MS). All data points were finally processed to obtain a penetration kinetic. As the variation in the penetration barrier of the cuticles is high, five to ten repetitions of each penetration kinetic were made.

### Results

4 % of tebuconazole can 0 % of spirotetramate could penetrate through an apple cuticle without any additives. Penetration rate of tebuconazole and spirotetramate can be improved significantly by mixing with recipe 5, recipe 6 and recipe 7 at 300 1/ha and 10 1/ha spray volume. Folicur^{®} SC mixed with recipe 5, recipe 6 and recipe 7 shows higher penetration at 10 l/ha than 300 1/ha. Movent^{®} SC mixed recipe 5, recipe 6 and recipe 7 showed comparable penetration rate at 300 1/ha and 10 1/ha. Recipe 5, recipe 6 and recipe 7 can utilize at wide range of spray volumes even at low spray volume.

**Table 3-1 Folicur^{®} SC mixed with recipe 5, recipe 6 and recipe 7**

| | Penetration rate of tebuconazole | | | |
|---|---|---|---|---|
| | After 24 hours | | | |
| Spray volume | no additives | + recipe 5 | + recipe 6 | + recipe 7 |
| 650 l/ha | 4% | No test | No test | No test |
| 300 l/ha | No test | 28% | 1 % | 28 % |
| 10 l/ha | No test | 50% | 16 % | 54% |

**Table 3-2 Movento^{®} SC mixed with recipe 5, recipe 6 and recipe 7**

| | Penetration rate of spirotetramate | | | |
|---|---|---|---|---|
| | After 48 hours | | | |
| Spray volume | no additives | + recipe 5 | + recipe 6 | + recipe 7 |
| 650 l/ha | 0% | No test | No test | No test |
| 300 l/ha | No test | 16 % | 10 % | 4% |
| 10 1/ha | No test | 16 % | 15 % | 15 % |

### Example 4 Pipette spreading tests on rice leaf

### Preparation of spray dilution

30 g of Nativo^{®} SC or 3 g of Nativo^{®} WG were diluted in 150 g of water to prepare a dilution was prepared, which corresponds to 15 1/ha of spray volume. A small amount of a fluorescent marker and 1.00 g of recipe 1, recipe 2, recipe 3, recipe 4 and 8, were added into the dilution.

### Method for application of spray dilution on rice leaf

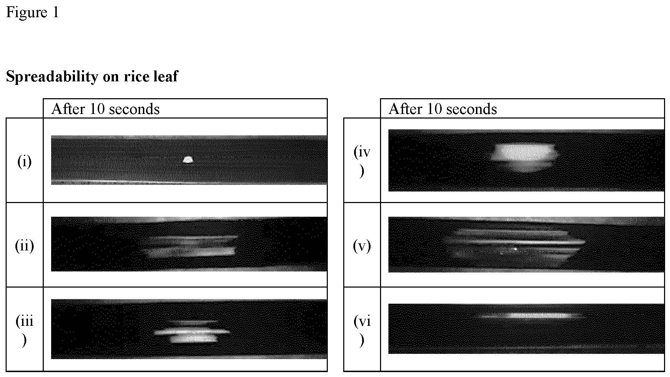

2 µl of a droplet of the prepared spray dilution was placed on rice leaf and spreading area were evaluated by taken a photo under irradiated UV illumination (365 nm) as shown figure 1.

### Results

Images of the leaf deposit on a cut rice leaf and spreading area after 10 seconds are shown Figure 1.

Nativo^{®} SC or Nativo^{®} WG mixed with from recipe 1 to recipe 4 and recipe 8 illustrative of the invention shows remarkably high spreading and at low spray water volume corresponds to 15 1/ha while Nativo^{®} SC shows poor coverage as expected for a spray applied at a low spray volume.

### Example 5 Cuticle wash-off test

### Preparation of spray dilution

3 g of Nativo^{®} WG were diluted in 150 g of water to prepare a dilution was prepared, which corresponds to 15 1/ha of spray volume. 1.00 g of recipe 1, recipe 8 were added into the dilution.

### Cuticle wash-off test

A disc from an apple cuticle was fixed with the outside surface facing upwards to a glass microscope slide with a thin layer of medium viscosity silicone oil. To this 1.0 µl drops of the spray dilution prepared by above procedure were applied with a micropipette and left to dry for 1 hour. Each deposit was examined in an optical transmission microscope fitted with crossed polarising filters and an image recorded. The slide containing the cuticle with the dried droplets of the formulations was held under gently running deionised water (flow rate approximately 300ml/minute at a height 10cm below the tap outlet) for 15s. The glass slide was allowed to dry and the deposits were re-examined in the microscope and compared to the original images. The amount of active ingredient washed off was visually estimated and recorded in steps of 10%. Three replicates were measured and the mean value recorded.

### Results

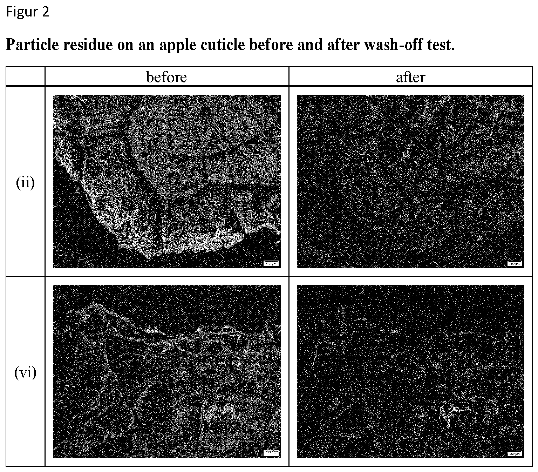

Images of the leaf deposit on an apple cuticle before and after wash off test are shown Figure 2.

Nativo^{®} SC mixed with from recipe 1 and recipe 8 illustrative of the invention shows clear differences. Recipe 8 including tiny amount of rain-fast additive, Atplus^{®} FA, performs better retention of particle deposit on an apple cuticle at low spray water volume corresponds to 15 1/ha while recipe 1 without rain-fast additive shows poor retention of particle deposit on an apple cuticle after wash-off test.

### Leaf surfaces

In Tables M1a and M1b the contact angle of water on leaf surfaces for textured and non-textured is shown.

**Table M1a Plants with textured leaves**

| Plant | Species | Contact angle of water ° (adaxial) |
|---|---|---|
| barley | Hordeum vulgare (var. Montoya) | 143° |
| corn, BBCH-11 | Zea mays | 150° |
| corn, BBCH-12 | Zea mays | 149° |
| corn, BBCH-13/14 | Zea mays | 148° |
| soybean, BBCH-12 | Glycine max | 149° |
| soybean, BBCH-13 | Glycine max | 144° |
| rice | Oryza sativa | 180° |
| wheat, BBCH-12 | Triticum aestivum | 148° |
| fat-hen | Chenopodium album | 137° |
| purple crabgrass | Digitaria sanguinalis | 144° |

**Table M1b Plants with non-textured leaves**

| Plant | Species | Contact angle of water ° (adaxial) |
|---|---|---|
| apple | Malus domestica | 104° |
| tomato | Solanum lycopersicum | 106° |
| corn, BBCH-15/16 | Zea mays | 108° |
| corn, BBCH-17 | Zea mays | 107° |
| corn, BBCH-18 | Zea mays | 96° |
| corn, BBCH-19 | Zea mays | 87° |
| velvetleaf | Abutilon theophrasti | 103° |
| redroot pigweed | Amaranthus retroflexus | not measured |

Examples of non-textured crops and plants include tomatoes, peppers, potatoes, carrot, celery, sugar beet, beetroot, spinach, lettuce, beans, peas, clover, apple, pear, peach, apricot, plum, mango, avocado, olive, citrus, orange, lemon, lime, grape, fig, cucumber, melon, water melon, strawberry, raspberry, blueberry, sunflower, pumpkin, soybean (≥ GS 16 (BBCH 16)), corn (≥ GS 15 (BBCH 15), cotton.

Examples of textured crops and plants include garlic, onions, leeks, soybean (≤ GS 16 (BBCH 16)), oats, wheat, barley, rice, sugarcane, pineapple, banana, linseed, lilies, orchids, corn (≤ GS 15 (BBCH 15)), cabbage, brussels sprouts, broccoli, Cauliflower, rye, rapeseed, tulips and peanut.

Examples of non-textured weeds include *Abutilon theophrasti, Capsella bursa-pastoris, Datura stramonium, Galium aparine, Ipomoea purpurea, Polygonum lapathifolium, Portulaca oleracea, Senecio vulgaris, Sida spinosa, Sinapis arvensis, Solanum nigrum, Stellaria media, Xanthium orientale, Cyperus rotundus, and Amaranthus retroflexus.*

Examples of textured weeds include *Cassia obtusifolia, Chenopodium album, Agropyron repens, Alopecurus myosuroides, Apera spica-venti, Avena fatua, Brachiaria plantaginea, Bromus secalinus, Cynodon dactylon, Digitaria sanguinalis, Echinochloa crus-galli, Panicum dichotomiflorum, Poa annua, Setaria faberi and Sorghum halepense.*

## Claims

1. Agricultural adjuvant compositions for tank-mixture with crop protection products comprising
a) One or more drift reducing ingredients
b) Optionally one or more rain-fast additives,
c) One or more spreading agents,
d) One or more uptake enhancing agents,
e) other formulants,
f) optionally one or more carriers to 100%.

2. Agricultural adjuvant compositions according to claim 1, **characterized in that** no filler f) is present and the composition is free of water.

3. Agricultural adjuvant compositions according to claim 1, characterized b) is mandatory.

4. Agricultural adjuvant compositions according to one or more of claims 1 to 3, wherein a) is selected from the group comprising poly(ethylene oxides), wherein the polymer has an average molecular weight preferably from 0.5 to 12 million g/mol, hydroxypropyl guar, vegetable oils and vegetable oil esters and diesters.

5. Agricultural adjuvant compositions according to one or more of claims 1 to 4, wherein c) is selected from the group comprising polyalkyleneoxide modified heptamethyltrisiloxanes, dioctylsulfosuccinate, alcohol ethoxylates and ethoxylated diacetylene-diols with 1 to 6 EO and 1-hexanol, 3,5,5-trimethyl-, ethoxylated, propoxylated, preferably from the group comprising polyalkyleneoxide modified heptamethyltrisiloxanes, dioctylsulfosuccinate and ethoxylated diacetylene-diols with 1 to 6 EO.

6. Agricultural adjuvant compositions according to one or more of claims 1 to 5, wherein d) is selected from the group comprising ethoxylated coconut alcohols, ethoxylated branched alcohols, propoxy-ethoxylated alcohols, ethoxylated mono- or diesters of glycerine comprising fatty acids with 8-18 carbon atoms and an average of 10-40 EO units, ethoxylated oleic acid.

7. Agricultural adjuvant compositions according to one or more of claims 1 to 4, wherein b) is an emulsion polymer or polymer dispersion with Tg in the range from -100°C to 30°C, wherein said polymer is a copolymer of an acrylate and a styrene, wherein said acrylate is selected from the group consisting of 2-ethyl-hexyl acrylate, butyl acrylate, sec-butyl acrylate, ethyl acrylate, methyl acrylate, acrylic acid, acrylamide, iso-butyl acrylate, methyl methacrylate, or combinations thereof, and said styrene is selected from the group consisting of styrene, tert-butyl styrene, para-methyl styrene, or combinations thereof.

8. Agricultural adjuvant compositions according to one or more of claims 1 to 5, wherein a) is present in an amount from 5 to 25 %, preferably from 10 to 23% g/l, and most preferred from 12 to 18%.

9. Agricultural adjuvant compositions according to one or more of claims 1 to 6, wherein b) is present in 0.1 to 5 %, preferably from 0.2 to 2.5%, and most preferred from 0.5 to .1.5 %.

10. Agricultural adjuvant compositions according to one or more of claims 1 to 7, wherein c) is present in 25 to 55 %, preferably from 30 to 55 %, and most preferred from 33 to 52 %.

11. Agricultural adjuvant compositions according to one or more of claims 1 to 8, wherein d) is present in 0.5 to 20 %, preferably from 1.0 to 18 %, and most preferred from 1.5 to 18 %.

12. Agricultural adjuvant compositions according to one or more of claims 1 to 9, wherein component e) comprises at least one antifoam substance (e3) and at least one antifreeze agent (e4).

13. Agricultural adjuvant compositions according to claim any one of claims 1 to 10, comprising the components a) to f) in the following amounts
a) from 5 to 25 %, preferably from 10 to 23% g/l, and most preferred from 12 to 18%,
b) from 0.1 to 5 %, preferably from 0.2 to 2.5%, and most preferred from 0.5 to .1.5 %,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e) 10 to 40, preferably from 12 to 35%, and most preferred from 14 to 35.5 %,
f) carrier to 100.

14. Agricultural adjuvant compositions according to claim any one of claims 1 to 10, comprising the components a) to e) in the following amounts
a) from 5 to 25 %, preferably from 10 to 23% g/l, and most preferred from 12 to 18%,
b) from 0.1 to 5 %, preferably from 0.2 to 2.5%, and most preferred from 0.5 to .1.5 %,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e3) from 0.01 to 2 %, preferably from 0.05 to 1.5 %, and most preferred from 0.5 to 1.5%,
e4) to 100%,

15. Agricultural adjuvant compositions according to claim any one of claims 1 to 10, comprising the components a) to e) in the following amounts
a) from 5 to 25 %, preferably from 10 to 23% g/l, and most preferred from 12 to 18%,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e3) from 0.01 to 2 %, preferably from 0.05 to 1.5 %, and most preferred from 0.5 to 1.5%,
e4) to 100%.

16. Agricultural adjuvant compositions according to claim any one of claims 1 to 10, comprising the components a) to e) in the following amounts
a) from 5 to 25 %, preferably from 10 to 23% g/l, and most preferred from 12 to 18%,
b) from 0.1 to 5 %, preferably from 0.2 to 2.5%, and most preferred from 0.5 to .1.5 %,
c) from 25 to 55 %, preferably from 30 to 55 %, and most preferred from 33 to 52 %,
d) from 0.5 to 20 %, preferably from 1.0 to 18 %, and most preferred from 1.5 to 18 %,
e1) from 0 to 15 %, preferably from 0,5 to 12 %, and most preferred from 1 to 10 %,
e2) from 0 to 5 %, preferably from 0.1 to 4 %, and most preferred from 0.2 to 3%,
e3) from 0.01 to 2 %, preferably from 0.05 to 1.5 %, and most preferred from 0.5 to 1.5%,
e4) to 100%,
e5) from 0 to 20 %, preferably from 0.01 to 12 %, and most preferred from 0.05 to 8 %.

17. Agricultural adjuvant adjuvant compositions according to one or more of claims 1 to 14 for use in tank mixes wherein the active ingredient is selected from the group consisting of trifloxystrobin, bixafen, prothioconazole, inpyrfluxam, isoflucypram, fluopicolide, fluopyram, fluoxapiprolin, isotianil, , spirotetramat, tetraniliprole, ethiprole, , imidacloprid, deltamethrin, flupyradifuron, spidoxamat, triafamone, tembotrione, thiencarbazone-methyl, isoxadifen-ethyl and cyprosulfamat.

18. Agrochemical adjuvant composition according to one or more claims 1 to 15 for use in tank mixes, wherein the formulation is applied at a spray volume of between 1 and 25 1/ha, preferably 2 and 20 1/ha, more preferably 5 and 15 1/ha.

19. Agrochemical adjuvant composition according to one or more claims 1 to 15 for use in tank mixes, wherein b) is applied from 0.01 g/ha to 50 g/ha, more preferably from 0.1 g/ha to 40 g/ha, and most preferred from 1 g/ha to 30 g/ha.

20. Agrochemical adjuvant composition according to one or more claims 1 to 15 for use in tank mixes, wherein c) is preferably applied from 5 g/ha to 150 g/ha, more preferably from 7.5 g/ha to 100 g/ha, and most preferred from 10 g/ha to 60 g/ha.

21. Agrochemical adjuvant composition according to one or more claims 1 to 15 for application on plants or crops with textured leaf surfaces.

22. Use of an agrochemical adjuvant composition according to one or more of the claims 1 to 12 in application of the agrochemical compounds for controlling harmful organisms, wherein the composition is applied by a UAV, UGV, PWM.
